(19) Europäisches Patentamt / European Patent Office / Office européen des brevets

(11) **EP 2 596 901 B1**

(12) **EUROPÄISCHE PATENTSCHRIFT**

(45) Veröffentlichungstag und Bekanntmachung des Hinweises auf die Patenterteilung:
**05.11.2014 Patentblatt 2014/45**

(51) Int Cl.:
**B23K 26/067** (2006.01)   **B23K 26/06** (2014.01)

(21) Anmeldenummer: **12007911.6**

(22) Anmeldetag: **23.11.2012**

(54) **Optische Bestrahlungsvorrichtung für eine Anlage zur Herstellung von dreidimensionalen Werkstücken durch Bestrahlen von Pulverschichten eines Rohstoffpulvers mit Laserstrahlung**

Optical irradiation device for an assembly for producing three-dimensional workpieces by means of irradiating powder layers of a raw powder with laser radiation

Dispositif de rayonnement optique pour une installation destinée à la fabrication de pièces à usiner tridimensionnelles par rayonnement de couches de pulvérisation d'une poudre de matière brute avec un rayonnement laser

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2011 DE 102011119319**

(43) Veröffentlichungstag der Anmeldung:
**29.05.2013 Patentblatt 2013/22**

(73) Patentinhaber: **SLM Solutions GmbH**
**23556 Lübeck (DE)**

(72) Erfinder:
• **Wiesner, Andreas**
**23628 Lübeck-Krummesse (DE)**
• **Schwarze, Dieter**
**33106 Paderborn (DE)**
• **Schöneborn, Henner**
**23556 Lübeck (DE)**

(74) Vertreter: **Frenkel, Matthias Alexander et al**
**Wuesthoff & Wuesthoff**
**Schweigerstrasse 2**
**81541 München (DE)**

(56) Entgegenhaltungen:
EP-A1- 2 335 848     EP-A2- 1 241 745
US-A1- 2001 023 861     US-A1- 2003 024 906

EP 2 596 901 B1

**Beschreibung**

Die vorliegende Erfindung betrifft eine optische Bestrahlungsvorrichtung gemäß dem Oberbegriff des Anspruchs, die für eine Anlage zur Herstellung von dreidimensionalen Werkstücken durch Bestrahlen von Pulverschichten eines Rohstoffpulvers mit Laserstrahlung vorgesehen ist. Ferner betrifft die Erfindung ein Verfahren gemäß dem Oberbegriff des Anspruchs zum Betreiben einer solchen optischen Bestrahlungsvorrichtung sowie eine Anlage zur Herstellung von dreidimensionalen Werkstücken durch Bestrahlen von Pulverschichten eines Rohstoffpulvers mit Laserstrahlung.

Das selektive Laserschmelzen (englisch: selective laser melting; kurz: SLM) oder das selektive Lasersintern (englisch: selective laser sintering; kurz: SLS) ist ein generatives Schichtbauverfahren, durch das pulverförmige, insbesondere metallische und/oder keramische Rohstoffe zu komplex geformten dreidimensionalen Werkstücken verarbeitet werden können. Hierzu wird eine Rohstoffpulverschicht auf einen Träger aufgebracht und in Abhängigkeit der gewünschten Geometrie des zu erstellenden Werkstücks ortsselektiv mit Laserstrahlung beaufschlagt. Die in die Pulverschicht eindringende Laserstrahlung bewirkt eine Erwärmung und folglich eine Verschmelzung oder Versinterung der Rohstoffpulverpartikel. Anschließend werden sukzessiv weitere Rohstoffpulverschichten auf die bereits laserbehandelte Schicht aufgebracht und erneut bestrahlt bis das Werkstück die gewünschte Form und Größe hat. Selektives Laserschmelzen oder Lasersintern kann insbesondere zur Herstellung von Prototypen, Werkzeugen, Ersatzteilen oder medizinischen Prothesen, wie zum Beispiel zahnärztlichen oder orthopädischen Prothesen anhand von CAD-Daten eingesetzt werden.

Eine SLM/SLS-Strategie besteht darin, das herzustellende Werkstück virtuell in einen Hüllenbereich und einen Kernbereich aufzuteilen. Bei der Herstellung des Werkstücks wird dann zunächst der Hüllenbereich mit einem Lichtstrahl bestrahlt, der ein vergleichsweise schmales und/oder gaußförmiges Strahlprofil aufweist, während im Anschluss daran der Kernbereich mit einem Lichtstrahl bestrahlt wird, der ein vergleichsweise breites und/oder homogenes Strahlprofil aufweist. Für diese sog. Hülle-Kern-Strategie sind demnach mindestens zwei unterschiedliche Strahlprofile erforderlich.

US 2001/0023861 A1 betrifft eine Laserbearbeitungsvorrichtung zum Schweißen, Schneiden usw. durch Aufbringen eines Laserstrahls auf ein Werkstück zur Verwendung in einer Kraftfahrzeug-Fertigungslinie. Hierbei sind ein erstes und ein zweites Lichtwellenleiter-(LWL)-Schaltgerät entlang eines Übertragungsweges eines Laserstrahls angeordnet, wobei ein erster Laser mit dem ersten LWL-Schaltgerät über ein erstes Glasfaserkabel und ein zweiter Laser mit dem ersten LWL-Schaltgerät über ein zweites Glasfaserkabel verbunden ist und die LWL-Schaltgeräte miteinander über ein erstes LWL-Kabel und ein zweites LWL-Kabel verbunden sind. Das erste LWL-Schaltgerät verbindet selektiv eines der ersten und zweiten Glasfaserkabel mit einem der ersten und zweiten LWL-Kabel.

Eine Aufgabe der vorliegenden Erfindung ist es, eine optische Bestrahlungsvorrichtung für eine Anlage zur Herstellung von Werkstücken durch Bestrahlung von Pulverschichten eines Rohstoffpulvers mit Laserstrahlung, ein Verfahren zum Betreiben einer solchen optischen Bestrahlungsvorrichtung und eine Anlage zur Herstellung von Werkstücken durch Bestrahlung von Pulverschichten eines Rohstoffpulvers mit Laserstrahlung anzugeben, mit Hilfe welcher Werkstücke effizienter hergestellt werden können.

Die obige Aufgabe wird durch eine optische Bestrahlungsvorrichtung mit den Merkmalen des Anspruchs 1, ein Verfahren zum Betreiben einer optischen Bestrahlungsvorrichtung mit den Merkmalen des Anspruchs 8, und eine Anlage mit den Merkmalen des Anspruchs 15 gelöst.

Die vorliegende Erfindung basiert unter anderem auf der folgenden Erkenntnis über die Ausbreitung von Licht in einer Lichtleitfaser.

Unter Lichtleitfaser ist ein Wellenleiter für elektromagnetische Wellen zu verstehen. Das in der Lichtleitfaser zu leitende Licht kann entweder anhand von Monomoden-Führung in der Grundmode oder anhand von Multimoden-Führung in der Grundmode und zusätzlich in einer oder mehreren höheren Moden in der Lichtleitfaser geführt werden. Die Grundmode kann beispielsweise in einer zylindersymmetrischen Lichtleitfaser gemäß der zwei Polarisationsfreiheitsgrade einer elektromagnetischen Welle zweifach entartet sein. Im letzteren Fall wird hier dennoch von Monomoden-Führung gesprochen.

Ob ein Lichtstrahl anhand von Monomoden-Führung oder anhand von Multimoden-Führung in einer Lichtleitfaser geleitet wird, hängt von physikalischen Parametern des Lichtstrahls und physikalischen Parametern der Lichtleitfaser ab.

Für die Führung eines Lichtstrahls innerhalb einer zylindrischen Lichtleitfaser sind beispielsweise die Wellenlänge $\lambda$ des Lichtstrahls sowie die cut-off-Wellenlänge $\lambda_{CO}$ der Lichtleitfaser relevant: Eine Monomoden-Führung des Lichtstrahls ist nur möglich, sofern die Wellenlänge $\lambda$ des Lichtstrahls länger ist als die cut-off-Wellenlänge $\lambda_{CO}$ der Lichtleitfaser oder gleichlang ist wie die cut-off-Wellenlänge $\lambda_{CO}$ der Lichtleitfaser, d.h. ist $\lambda \geq \lambda_{CO}$. Ist die Wellenlänge $\lambda$ des Lichtstrahls kürzer als die cut-off-Wellenlänge $\lambda_{CO}$ der Lichtleitfaser, d.h. ist $\lambda < \lambda_{CO}$, so kann Multimoden-Führung auftreten. Ob eine Lichtleitfaser eine Monomoden-Lichtleitfaser oder eine Multimoden-Lichtleitfaser ist, hängt demnach von der cut-off-Wellenlänge $\lambda_{CO}$ der Lichtleitfaser und der Wellenlänge $\lambda$ des zu führenden Lichtstrahls ab. Sind die cut-off-Wellenlänge $\lambda_{CO}$ der Lichtleitfaser und/oder die Wellenlänge $\lambda$ des zu führenden Lichtstrahls unbekannt, ist eine Aussage, anhand wie vieler Moden der Lichtstrahl geführt wird, nicht möglich.

Beispielsweise berechnet sich für eine zylindrische Lichtleitfaser, welche einen (Faser-) Kern mit einem Kerndurchmesser d und mit einem Brechungsindex $n_K$ sowie einen den Kern ummantelnden Mantel (englisch: cladding) mit einem Brechungsindex $n_M$ aufweist, die cut-off-Wellenlänge $\lambda_{CO}$ der Lichtleitfaser gemäß:

$$\lambda_{co} = \frac{\pi \, d \, NA}{2{,}405},$$

wobei NA die Numerische Apertur der Lichtleitfaser ist und

$$NA = \sqrt{n_K^2 - n_M^2}.$$

Insbesondere die laterale Intensitätsverteilung des Modenfelds, welches einen Lichtstrahl bei dessen Austritt an einem Faserende einer Multimoden-Lichtleitfaser repräsentiert, hängt davon ab, anhand wie vieler und anhand welcher Moden der Lichtstrahl in der Multimoden-Lichtleitfaser geführt wird. Anhand wie vieler und anhand welcher Moden der Lichtstrahl in der Multimoden-Lichtleitfaser geführt wird hängt hingegen insbesondere davon ab, wie der Lichtstrahl in die Multimoden-Lichtleitfaser eingekoppelt wird. Das bedeutet, dass durch sorgfältiges Einkoppeln des Lichtstrahls in die Multimoden-Lichtleitfaser ein nahezu beliebiges Strahlprofil des aus der Multimoden-Lichtleitfaser austretenden Lichtstrahls erzeugt werden kann.

So kann beispielsweise ein Lichtstrahl mit gaußförmigem Strahlprofil in eine Multimoden-Lichtleitfaser derart eingekoppelt werden, dass der Lichtstrahl bei Wiederaustritt aus der Multimoden-Lichtleitfaser den Faserkern der Multimoden-Lichtleitfaser im Wesentlichen vollständig ausleuchtet und ein homogenisiertes oder nahezu homogenes Strahlprofil zumindest über einen Teilabschnitt des Querschnitts des Faserkerns aufweist.

Umgekehrt bedeutet dies, dass zur Erzeugung eines gewünschten, insbesondere homogenisierten oder homogenen Strahlprofils eines aus einer Lichtleitfaser austretenden Lichtstrahls die Lichtleitfaser auch tatsächlich als eine Multimoden-Lichtleitfaser für den entsprechenden Lichtstrahl ausgebildet sein muss.

Mit Hilfe einer Multimoden-Lichtleitfaser kann also das Strahlprofil eines Lichtstrahls gezielt manipuliert werden. Insbesondere ist es möglich, durch wahlweises Umleiten eines Lichtstrahls durch eine Multimoden-Lichtleitfaser zwischen einem ersten Strahlprofil und einem von dem ersten Strahlprofil verschiedenen zweiten Strahlprofil umzuschalten.

Eine erfindungsgemäße optische Bestrahlungsvorrichtung für eine Anlage zur Herstellung von Werkstücken durch Bestrahlung von Pulverschichten eines Rohstoffpulvers mit Laserstrahlung ist im Anspruch 1 angegeben.

Die erfindungsgemäße optische Bestrahlungsvorrichtung ermöglicht es demnach, dass durch wahlweises Umleiten eines Lichtstrahls durch eine Multimoden-Lichtleitfaser zwischen einem ersten Strahlprofil und einem von dem ersten Strahlprofil verschiedenen zweiten Strahlprofil umgeschaltet werden kann. Dies erlaubt insbesondere ein für eine Hülle-Kern-Strategie erforderliches Umschalten zwischen zwei verschiedenen Strahlprofilen. Ist zum Beispiel das erste Strahlprofil ein vergleichsweise schmales und/oder gaußförmiges Strahlprofil und das zweite Strahlprofil ein vergleichsweise breites und/oder homogenes Strahlprofil, so kann mit Hilfe der vorliegenden Erfindung bei der Herstellung eines Werkstücks zunächst der Hüllenbereich mit dem ersten Strahlprofil bestrahlt und im Anschluss daran der Kernbereich mit dem zweiten Strahlprofil bestrahlt werden, wobei zwischen den beiden Bauabschnitten von dem ersten Lichtleitzustand in den zweiten Lichtleitzustand umgeschaltet wird. Insgesamt ermöglicht die vorliegende Erfindung also eine effiziente Herstellung von Werkstücken.

Ein weiterer Vorteil der vorliegenden Erfindung ist es, dass durch das erfindungsgemäße wahlweise Umschalten ein einziger Lichtstrahl über zwei verschiedene Strahlgänge geleitet werden kann. Durch dieses Prinzip der Umleitung ist es nicht erforderlich, für die Bereitstellung von zwei unterschiedlichen Strahlprofilen zwischen zwei Lichtstrahlen hin- und her zu schalten, von denen jeweils einer bei Nichtgebrauch in einer Strahlfalle (englisch: beam dump) "geparkt" werden muss. Dies ermöglicht eine effiziente Nutzung von vorhandener Lichtleistung.

Das erste Strahlprofil kann ein gaußförmiges Strahlprofil sein. Das zweite Strahlprofil kann ein vergleichmäßigtes, ein homogenisiertes, ein gleichförmiges, ein nahezu gleichförmiges, ein homogenes, ein nahezu homogenes, ein Top-Hat-förmiges und/oder ein nahezu Top-Hat-förmiges Strahlprofil sein. Eine das erste Strahlprofil charakterisierende Breite in der lateralen Intensitätsverteilung des ersten Strahlprofils ist schmaler als eine das zweite Strahlprofil charakterisierende Breite in der lateralen Intensitätsverteilung des zweiten Strahlprofils.

Die Multimoden- (englisch: multi mode; kurz: MM) Lichtleitfaser kann als eine zylindrische Multimoden-Lichtleitfaser, eine zylindersymmetrische Multimoden-Lichtleitfaser, eine Stufenindex-Multimoden-Lichtleitfaser, eine Gradientenindex-Multimoden-Lichtleitfaser und/oder eine photonische-Kristall- (englisch: photonic crystal) Multimoden-Lichtleitfaser ausgebildet sein. Eine Stufenindex-Multimoden-Lichtleitfaser ist eine zylindersymmetrische Multimoden-Lichtleitfaser, welche einen (Faser-)Kern mit einem Kerndurchmesser $d_{MM}$ und einem Brechungsindex $n_{K,MM}$ sowie einen den Kern ummantelnden Mantel (englisch: cladding) mit einem Brechungsindex $n_{M,MM}$ aufweist. Vorzugsweise gilt: $n_{K,MM} > n_{M,MM}$. Die Multimoden-Lichtleitfaser kann zusätzlich von weiteren Hüllen oder Schichten wie einer Schutzbeschichtung (englisch: coating) und/oder einer äußeren Schutzhülle (englisch: jacket) ummantelt sein. Die Multimoden-Lichtleitfaser kann auch als polarisationserhaltende (englisch: polarization maintaining; kurz: PM) Multimoden-Lichtleitfaser ausgebildet sein. Der Kerndurchmesser $d_{MM}$ beträgt vorzugsweise 100 μm. Die Multimoden-Lichtleitfaser kann durch eine für die Monomoden-Führung erforderliche cut-off-Wellenlänge $\lambda_{CO,MM}$ charakterisiert sein.

Der Eingangsanschluss und/oder der Ausgangsanschluss kann/können jeweils als zur Strahlachse des durch den Eingangsanschluss und/oder den Ausgangsanschluss hindurchtretenden Lichtstrahls konzentrisch angeordneter Tubus ausgebildet sein.

Der Tubus kann einen Außendurchmesser von 40 mm und/oder einen eine verlustfreie Passage des durch den Eingangsanschluss und/oder den Ausgangsanschluss hindurchtretenden Lichtstrahls angepassten Innendurchmesser aufweisen, damit das Strahlprofil des Lichtstrahls durch den Eingangsanschluss und/oder den Ausgangsanschluss nicht beeinträchtigt wird. Ein Tubus ist vorzugsweise dazu eingerichtet, dass an ihn eine weitere Komponente der optischen Bestrahlungsvorrichtung wie beispielsweise eine weiter unten beschriebene optische Komponente und/oder ein weiter unten beschriebener Eingangskollimator anschließbar ist.

Die Umschaltvorrichtung umfasst vorzugsweise eine erste Lichtlenkeinheit, die dazu eingerichtet ist, im zweiten Lichtleitzustand der Umschaltvorrichtung den durch den Eingangsanschluss eintretenden, das erste Strahlprofil aufweisenden Lichtstrahl auf ein erstes Faserende der Multimoden-Lichtleitfaser derart zu lenken, dass der Lichtstrahl bei Austritt aus einem zweiten Faserende der Multimoden-Lichtleitfaser das zweite Strahlprofil aufweist. Vorzugsweise ist die erste Lichtlenkeinheit dazu eingerichtet, im zweiten Lichtleitzustand den durch den Eingangsanschluss eintretenden Lichtstrahl auf das erste Faserende der Multimoden-Lichtleitfaser derart zu lenken, dass der Lichtstrahl bei Austritt aus dem zweiten Faserende der Multimoden-Lichtleitfaser zumindest einen Abschnitt des (Faser-)Kerns der Multimoden-Lichtleitfaser gleichmäßig, nahezu gleichmäßig, homogen und/oder nahezu homogen ausleuchtet. Dabei kann das Modenfeld, welches den Lichtstrahl bei Austritt aus dem zweiten Faserende der Multimoden-Lichtleitfaser repräsentiert, eine zumindest über einen Abschnitt der Austrittsfläche des (Faser-)Kerns der Multimoden-Lichtleitfaser vergleichmäßigte, homogenisierte, gleichmäßige, nahezu gleichmäßige, homogene und/oder nahezu homogene laterale Intensitätsverteilung aufweisen.

Vorzugsweise umfasst die Umschaltvorrichtung ferner eine zweite Lichtlenkeinheit, die dazu eingerichtet ist, im zweiten Lichtleitzustand der Umschaltvorrichtung den aus dem zweiten Faserende der Multimoden-Lichtleitfaser austretenden, das zweite Strahlprofil aufweisenden Lichtstrahl zum Ausgangsanschluss zu lenken. Die zweite Lichtlenkeinheit kann dazu ferner eingerichtet sein, im zweiten Lichtleitzustand den aus dem zweiten Faserende der Multimoden-Lichtleitfaser austretenden Lichtstrahl derart zum Ausgangsanschluss zu lenken, dass er koaxial mit dem durch den Eingangsanschluss eintretenden Lichtstrahl verläuft.

Die erste Lichtlenkeinheit der Umschaltvorrichtung kann einen in den oder aus dem Strahlengang des durch den Eingangsanschluss eintretenden Lichtstrahls bewegbaren ersten Lichtlenkspiegel umfassen. Der erste Lichtlenkspiegel kann dazu eingerichtet sein, den durch den Eingangsanschluss eintretenden Lichtstrahl aus seinem ursprünglichen Strahlengang auszukoppeln und/oder umzulenken. Der erste Lichtlenkspiegel kann insbesondere dazu eingerichtet sein, den durch den Eingangsanschluss eintretenden Lichtstrahl um vorzugsweise etwa 90° umzulenken. Ferner kann die erste Lichtlenkeinheit einen ersten Lichtlenkkollimator umfassen. Der erste Lichtlenkkollimator kann dazu eingerichtet sein, im zweiten Lichtleitzustand den anhand des ersten Lichtlenkspiegels gelenkten Lichtstrahl auf das erste Faserende der Multimoden-Lichtleitfaser zu lenken und/oder zu fokussieren.

Die zweite Lichtlenkeinheit der Umschaltvorrichtung kann einen zweiten Lichtlenkkollimator umfassen. Der zweite Lichtlenkkollimator kann dazu eingerichtet sein, im zweiten Lichtleitzustand den aus dem zweiten Faserende der Multimoden-Lichtleitfaser austretenden Lichtstrahl zu bündeln und/oder zu kollimieren. Die zweite Lichtlenkeinheit kann ferner einen in den oder aus dem Strahlengang des durch den Eingangsanschluss eintretenden Lichtstrahls bewegbaren zweiten Lichtlenkspiegel umfassen. Der zweite Lichtlenkspiegel kann dazu eingerichtet sein, den aus dem zweiten Faserende der Multimoden-Lichtleitfaser austretenden Lichtstrahl derart durch den Ausgangsanschluss zu lenken, dass er koaxial mit dem durch den Eingangsanschluss eintretenden Lichtstrahl verläuft. Der zweite Lichtlenkspiegel kann dazu eingerichtet sein, den aus dem zweiten Faserende der Multimoden-Lichtleitfaser austretenden Lichtstrahl um vorzugsweise etwa 90° umzulenken.

Die optische Bestrahlungsvorrichtung kann einen Eingangskollimator umfassen. Der Eingangskollimator kann mit einer Lichtleitfaser, insbesondere mit einer Monomoden-Lichtleitfaser verbindbar sein. Der Eingangskollimator kann dazu eingerichtet sein, einen aus einer mit dem Eingangskollimator verbundenen Lichtleitfaser austretenden Lichtstrahl zu kollimieren und/oder durch den Eingangsanschluss zu führen.

Außerdem kann die optische Bestrahlungsvorrichtung eine für die Zentralwellenlänge $\lambda$ eines Lichtstrahls zur Monomoden-Führung geeignete Monomoden- (englisch: single mode; kurz: SM) Lichtleitfaser umfassen. Die Monomoden-Lichtleitfaser kann als laseraktives Medium eines als Faserlaser ausgebildeten Lasers dienen. Die Monomoden-Lichtleitfaser kann an einem Faserende mit dem Eingangskollimator verbunden sein.

Die Monomoden-Lichtleitfaser kann als eine zylindrische Monomoden-Lichtleitfaser, eine zylindersymmetrische Monomoden-Lichtleitfaser, eine Stufenindex-Monomoden-Lichtleitfaser, eine Gradientenindex-Monomoden-Lichtleitfaser und/oder eine photonische-Kristall- (photonic crystal) Monomoden-Lichtleitfaser ausgebildet sein. Eine Stufenindex-Monomoden-Lichtleitfaser ist eine zylindersymmetrische Monomoden-Lichtleitfaser, welche einen (Faser-)Kern mit einem Kerndurchmesser $d_{SM}$ und einem Brechungsindex $n_{K,SM}$ sowie einen den Kern ummantelnden Mantel (cladding) mit einem Brechungsindex $n_{M,SM}$ aufweist. Vorzugsweise gilt: $n_{K,SM} > n_{M,SM}$. Die Monomoden-Lichtleitfaser kann zusätzlich von weiteren Hüllen oder Schichten wie einer Schutzbeschichtung (coating) und/oder einer äußeren Schutzhülle (jacket) ummantelt sein. Die Monomoden-Lichtleitfaser kann auch als polarisationserhaltende (polarization maintaining; PM) Monomoden-Lichtleitfaser ausgebildet sein. Der Kerndurchmesser $d_{SM}$ beträgt vorzugsweise 20 µm. Die Monomoden-Lichtleitfaser kann durch eine für die Monomoden-Führung erforderliche cut-off-Wellenlänge $\lambda_{CO,SM}$ charakterisiert sein.

Die optische Bestrahlungsvorrichtung umfasst ferner einen Laser zur Erzeugung eines eine Zentralwellenlänge $\lambda$ aufweisenden Lichtstrahls. Der Laser erzeugt vorzugsweise einen Lichtstrahl, der ein schmalbandiges Spektrum mit einer Zentralwellenlänge $\lambda$ aufweist. Als Zentralwellenlänge $\lambda$ wird der Median des Spektrums verstanden. Die Zentralwellenlänge $\lambda$ kann zwischen 1000 nm und 1100 nm, vorzugsweise zwischen 1050 nm und 1075 nm, besonders bevorzugt bei 1064 nm liegen. Die Zentralwellenlänge $\lambda$ erfährt vorzugsweise in einem zu verarbeitenden Rohstoffpulver eine hohe Absorption. Die Ausgangsleistung des Lasers 12 beträgt beispielsweise im Dauerstrich (englisch: continuous wave; kurz: CW) Betrieb 1 kW. Jedoch kann die Ausgangsleistung des Lasers auch einstellbar sein. Der Laser kann als Faserlaser ausgebildet sein.

Der Laser kann dazu eingerichtet sein, den Lichtstrahl mit einer Zentralwellenlänge $\lambda$ zu erzeugen, die länger ist als die für die Monomoden-Führung erforderliche cut-off-Wellenlänge $\lambda_{CO,SM}$ der Monomoden-Lichtleitfaser. Der Laser ist dazu eingerichtet, den Lichtstrahl mit einer Zentralwellenlänge $\lambda$ zu erzeugen, die kürzer ist als die für die Monomoden-Führung erforderliche cut-off-Wellenlänge $\lambda_{CO,MM}$ der Multimoden-Lichtleitfaser.

Der Laser und die Monomoden-Lichtleitfaser können derart miteinander verbunden und angepasst sein, dass an einem dem Laser abgewandten Faserende der Monomoden-Lichtleitfaser ein allein durch die Grundmode der Monomoden-Lichtleitfaser beschriebener Lichtstrahl austritt.

Die Monomoden-Lichtleitfaser, ein Faserende der Monomoden-Lichtleitfaser, der Eingangskollimator, die erste Lichtlenkeinheit, der erste Lichtlenkspiegel, der erste Lichtlenkkollimator, die Multimoden-Lichtleitfaser und/oder das erste Faserende der Multimoden-Lichtleitfaser können im zweiten Lichtleitzustand zueinander derart angeordnet, positioniert und/oder orientiert sein, dass der Lichtstrahl bei Austritt aus dem zweiten Faserende der Multimoden-Lichtleitfaser das zweite Strahlprofil aufweist. Vorzugsweise können die Monomoden-Lichtleitfaser, das Faserende der Monomoden-Lichtleitfaser, der Eingangskollimator, die erste Lichtlenkeinheit, der erste Lichtlenkspiegel, der erste Lichtlenkkollimator, die Multimoden-Lichtleitfaser und/oder das erste Faserende der Multimoden-Lichtleitfaser im zweiten Lichtleitzustand zueinander derart angeordnet, positioniert und/oder orientiert sein, dass der Lichtstrahl bei Austritt aus dem zweiten Faserende der Multimoden-Lichtleitfaser zumindest einen Abschnitt des (Faser-)Kerns der Multimoden-Lichtleitfaser gleichmäßig, nahezu gleichmäßig, homogen und/oder nahezu homogen ausleuchtet. Dabei kann das Modenfeld, welches den Lichtstrahl bei Austritt aus dem zweiten Faserende der Multimoden-Lichtleitfaser repräsentiert, eine zumindest über einen Abschnitt der Austrittsfläche des (Faser-)Kerns der Multimoden-Lichtleitfaser vergleichmäßigte, homogenisierte, gleichmäßige, nahezu gleichmäßige, homogene und/oder nahezu homogene laterale Intensitätsverteilung aufweisen.

Die optische Bestrahlungsvorrichtung kann ferner optische Komponenten umfassen, die dazu eingerichtet sind, den aus dem Ausgangsanschluss austretenden Lichtstrahl auf einen Fokus zu fokussieren und/oder den Fokus dreidimensional im Raum zu führen.

Insbesondere können die optischen Komponenten dazu eingerichtet sein, den aus dem Ausgangsanschluss austretenden Lichtstrahl auf einen beliebigen Punkt innerhalb eines Scanfelds zu fokussieren. Vorzugsweise sind die optischen Komponenten dazu eingerichtet, den aus dem Ausgangsanschluss austretenden Lichtstrahl auf einen beliebigen Punkt innerhalb eines ebenen, also ungekrümmten Scanfelds zu fokussieren. Dabei kann die Steuerung des Fokus durch die optischen Komponenten derart erfolgen, dass auf ein f-Theta-Objektiv zur Fokussierung des Lichtstrahls verzichtet werden kann. Die optischen Komponenten können ferner dazu eingerichtet sein, den aus dem Ausgangsanschluss austretenden Lichtstrahl aufzuweiten. Der Aufweitungsfaktor beträgt beispielsweise 1,68.

Der Eingangskollimator und die optischen Komponenten können derart ausgebildet und im ersten Lichtleitzustand derart angeordnet sein, dass das Faserende der Monomoden-Lichtleitfaser und/oder das Strahlprofil des aus der Monomoden-Lichtleitfaser austretenden Lichtstrahls auf das Scanfeld scharf abgebildet wird/werden. Der zweite Lichtlenkkollimator, der zweite Lichtlenkspiegel und die optischen Komponenten können derart ausgebildet und im zweiten Lichtleitzustand derart angeordnet sein, dass das Faserende der Multimoden-Lichtleitfaser und/oder das Strahlprofil des aus der Multimoden-Lichtleitfaser austretenden Lichtstrahls auf das Scanfeld scharf abgebildet wird/werden.

Ein erfindungsgemäßes Verfahren zum Betreiben einer optischen Bestrahlungsvorrichtung für eine Anlage zur Herstellung von Werkstücken durch Bestrahlung von Pulverschichten eines Rohstoffpulvers mit Laserstrahlung ist im Anspruch 1 angegeben.

Vorzugsweise wird bei dem Verfahren im zweiten Lichtleitzustand der durch den Eingangsanschluss eintretende, das erste Strahlprofil aufweisende Lichtstrahl auf ein erstes Faserende der Multimoden-Lichtleitfaser derart gelenkt, dass der Lichtstrahl bei Austritt aus einem zweiten Faserende der Multimoden-Lichtleitfaser das zweite Strahlprofil aufweist. Vorzugsweise wird im zweiten Lichtleitzustand der durch den Eingangsanschluss eintretende Lichtstrahl auf das erste Faserende der Multimoden-Lichtleitfaser derart gelenkt, dass der Lichtstrahl bei Austritt aus dem zweiten Faserende der Multimoden-Lichtleitfaser zumindest einen Abschnitt des (Faser-)Kerns der Multimoden-Lichtleitfaser gleichmäßig, nahezu gleichmäßig, homogen und/oder nahezu homogen ausleuchtet. Dabei kann das Modenfeld, welches den Lichtstrahl bei Austritt aus dem zweiten Faserende der Multimoden-Lichtleitfaser repräsentiert, eine zumindest über einen Abschnitt der Austrittsfläche des (Faser-)Kerns der Multimoden-Lichtleitfaser vergleichmäßigte, homogenisierte, gleichmäßige, nahezu gleichmäßige, homogene und/oder nahezu homogene laterale Intensitätsverteilung aufweisen.

Vorzugsweise wird bei dem Verfahren im zweiten Lichtleitzustand der aus dem zweiten Faserende der Multimoden-Lichtleitfaser austretende, das zweite Strahlprofil aufweisende Lichtstrahl zum Ausgangsanschluss gelenkt. Insbesondere wird im zweiten Lichtleitzustand der aus dem zweiten Faserende der Multimoden-Lichtleitfaser austretende Lichtstrahl derart zum Ausgangsanschluss gelenkt, dass er koaxial mit dem durch den Eingangsanschluss eintretenden Lichtstrahl verläuft.

Vorzugsweise wird bei dem Verfahren zwischen dem ersten und zweiten Lichtleitzustand ein erster Lichtlenkspiegel in den oder aus dem Strahlengang des durch den Eingangsanschluss eintretenden Lichtstrahls bewegt. Der durch den Eingangsanschluss eintretende Lichtstrahl kann anhand des ersten Lichtlenkspiegels aus seinem ursprünglichen Strahlengang ausgekoppelt und/oder umgelenkt werden. Insbesondere kann der durch den Eingangsanschluss eintretende Lichtstrahl anhand des ersten Lichtlenkspiegels um vorzugsweise etwa 90° umgelenkt werden. Ferner kann im zweiten Lichtleitzustand mit Hilfe eines ersten Lichtlenkkollimators der anhand des ersten Lichtlenkspiegels gelenkte Lichtstrahl auf das erste Faserende der Multimoden-Lichtleitfaser gelenkt und/oder fokussiert werden.

Vorzugsweise wird bei dem Verfahren im zweiten Lichtleitzustand der aus dem zweiten Faserende der Multimoden-Lichtleitfaser austretende Lichtstrahl anhand eines zweiten Lichtlenkkollimators gebündelt und/oder kollimiert. Vorzugsweise wird bei dem Verfahren zwischen dem ersten und zweiten Lichtleitzustand ein zweiter Lichtlenkspiegel in den oder aus dem Strahlengang des durch den Eingangsanschluss eintretenden Lichtstrahls bewegt. Insbesondere wird der aus dem zweiten Faserende der Multimoden-Lichtleitfaser austretende Lichtstrahl anhand eines zweiten Lichtlenkspiegels derart durch den Ausgangsanschluss gelenkt, dass er koaxial mit dem durch den Eingangsanschluss eintretenden Lichtstrahl verläuft. Der aus dem zweiten Faserende der Multimoden-Lichtleitfaser austretende Lichtstrahl kann anhand des zweiten Lichtlenkspiegels um vorzugsweise etwa 90° umgelenkt werden.

Vorzugsweise wird bei dem Verfahren ein Lichtstrahl anhand eines Eingangskollimators kollimiert und/oder durch den Eingangsanschluss geführt. Ferner wird bei dem Verfahren vorzugsweise eine für eine Zentralwellenlänge $\lambda$ des Lichtstrahls zur Monomoden-Führung geeignete Monomode-Lichtleitfaser bereitgestellt.

Bei dem Verfahren wird ein eine Zentralwellenlänge $\lambda$ aufweisender Lichtstrahl anhand eines Lasers erzeugt. Insbesondere kann der erzeugte Lichtstrahl anhand einer für die Zentralwellenlänge $\lambda$ des erzeugten Lichtstrahls zur Monomoden-Führung geeigneten Monomoden-Lichtleitfaser derart geführt werden, dass der Lichtstrahl anhand von Monomoden-Führung in der Monomoden-Lichtleitfaser bei Austritt aus der Monomoden-Lichtleitfaser ein erstes Strahlprofil aufweist. Vorzugsweise wird der aus der Monomoden-Lichtleitfaser austretende Lichtstrahl anhand des Eingangskollimators kollimiert und/oder der kollimierte Lichtstrahl durch den Eingangsanschluss geführt.

Insbesondere kann der Lichtstrahl anhand des Lasers mit einer Zentralwellenlänge $\lambda$ erzeugt werden, die länger ist als eine für die Monomoden-Führung erforderliche cut-off-Wellenlänge $\lambda_{CO,SM}$ der Monomoden-Lichtleitfaser. Der Lichtstrahl wird anhand des Lasers mit einer Zentralwellenlänge $\lambda$ erzeugt, die kürzer ist als eine für die Monomoden-Führung erforderliche cut-off-Wellenlänge $\lambda_{CO,SM}$ der Multimoden-Lichtleitfaser.

Vorzugsweise werden bei dem Verfahren die Monomoden-Lichtleitfaser, ein Faserende der Monomoden-Lichtleitfaser, der Eingangskollimator, die erste Lichtlenkeinheit, der erste Lichtlenkspiegel, der erste Lichtlenkkollimator, die Multimoden-Lichtleitfaser und/oder das erste Faserende der Multimoden-Lichtleitfaser im zweiten Lichtleitzustand zueinander derart angeordnet, positioniert und/oder orientiert, dass der Lichtstrahl bei Austritt aus dem zweiten Faserende der Multimoden-Lichtleitfaser das zweite Strahlprofil aufweist. Insbesondere werden die Monomoden-Lichtleitfaser, das Faserende der Monomoden-Lichtleitfaser, der Eingangskollimator, die erste Lichtlenkeinheit, der erste Lichtlenkspiegel, der erste Lichtlenkkollimator, die Multimoden-Lichtleitfaser und/oder das erste Faserende der Multimoden-Lichtleitfaser im zweiten Lichtleitzustand zueinander derart angeordnet, positioniert und/oder orientiert, dass der Lichtstrahl bei Austritt aus dem zweiten Faserende der Multimoden-Lichtleitfaser zumindest einen Abschnitt des (Faser-)Kerns der Multimoden-Lichtleitfaser gleichmäßig, nahezu gleichmäßig, homogen und/oder nahezu homogen ausleuchtet. Dabei kann das Modenfeld, welches den Lichtstrahl bei Austritt aus dem zweiten Faserende der Multimoden-Lichtleitfaser repräsentiert, eine zumindest über einen Abschnitt der Austrittsfläche des (Faser-)Kerns der Multimoden-Lichtleitfaser vergleichmäßigte, homogenisierte, gleichmäßige, nahezu gleichmäßige, homogene und/oder nahezu homogene laterale Intensitätsverteilung aufweisen.

Vorzugsweise wird bei dem Verfahren der aus dem Ausgangsanschluss austretende Lichtstrahl anhand von optischen Komponenten auf einen Fokus fokussiert und der Fokus anhand der optischen Komponenten im Raum dreidimensional geführt.

Eine erfindungsgemäße Anlage zur Herstellung von Werkstücken durch Bestrahlung von Pulverschichten eines Rohstoffpulvers mit Laserstrahlung umfasst einen Träger, auf welchen Pulverschichten des Rohstoffpulvers aufbringbar sind sowie eine oben beschriebene optische Bestrahlungsvorrichtung. Dabei ist die optische Bestrahlungsvorrichtung dazu ausgebildet und angeordnet, eine auf dem Träger aufgebrachte Pulverschicht mit dem Lichtstrahl zu bestrahlen, um aus dem Rohstoffpulver durch ein generatives Schichtbauverfahren ein dreidimensionales Werkstück herzustellen.

Soweit in dieser Beschreibung ein Verfahren bzw. einzelne Schritte eines Verfahrens zum Betreiben einer optischen Bestrahlungsvorrichtung für eine Anlage zur Herstellung von Werkstücken durch Bestrahlung von Pulverschichten eines Rohstoffpulvers mit Laserstrahlung beschrieben wird/werden, kann das Verfahren bzw. können einzelne Schritte des Verfahrens durch eine entsprechend ausgestaltete optische Bestrahlungsvorrichtung ausgeführt werden. Analoges gilt für die Erläuterung der Betriebsweise einer optischen Bestrahlungsvorrichtung, die Verfahrensschritte ausführt. Insofern sind Vorrichtungs- und Verfahrensmerkmale dieser Beschreibung äquivalent/austauschbar.

Die Erfindung wird nachfolgend anhand der beigefügten Zeichnungen weiter erläutert, von denen

Fig. 1a eine schematische Übersichtsdarstellung einer optischen Bestrahlungsvorrichtung gemäß einem Ausführungsbeispiel zeigt, wobei sich eine Umschaltvorrichtung in einem ersten Lichtleitzustand befindet,

Fig. 1b eine schematische Übersichtsdarstellung der optischen Bestrahlungsvorrichtung aus Fig. 1a zeigt, wobei sich die Umschaltvorrichtung in einem zweiten Lichtleitzustand befindet,

Fig. 2a eine schematische Darstellung eines Strahlprofils eines aus einer Monomoden-Lichtleitfaser austretenden Lichtstrahls zeigt,

Fig. 2b eine schematische Darstellung eines Strahlprofils eines durch einen Eingangsanschluss eintretenden Lichtstrahls zeigt,

Fig. 2c eine schematische Darstellung eines Strahlprofils eines aus einer Multimoden-Lichtleitfaser austretenden Lichtstrahls zeigt,

Fig. 2d eine schematische Darstellung eines Strahlprofils eines durch einen Ausgangsanschluss austretenden Lichtstrahls zeigt, und

Fig. 3 eine schematische Übersichtsdarstellung einer Anlage zur Herstellung von Werkstücken durch Bestrahlung von Pulverschichten eines Rohstoffpulvers mit Laserstrahlung zeigt.

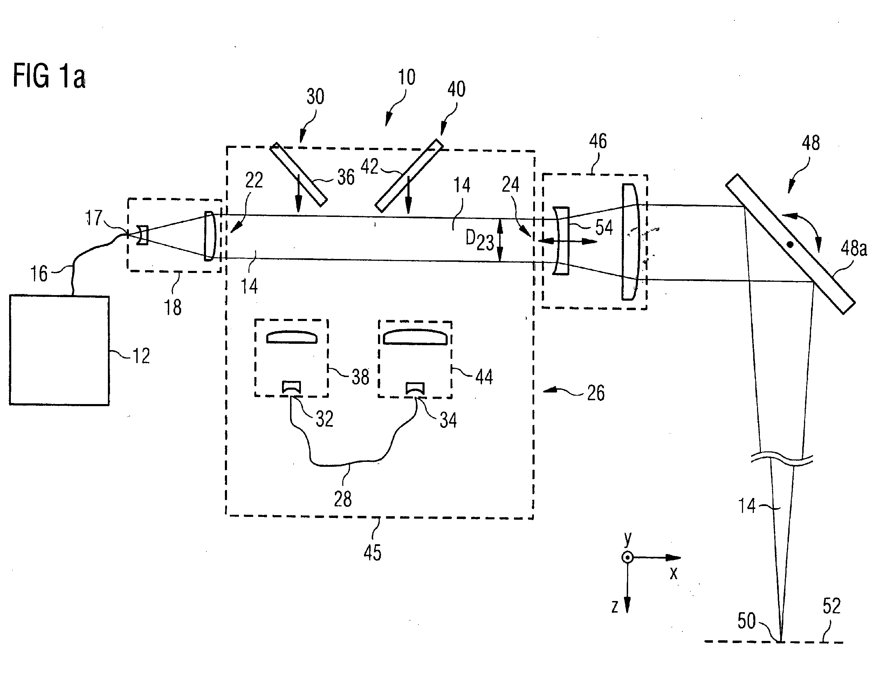

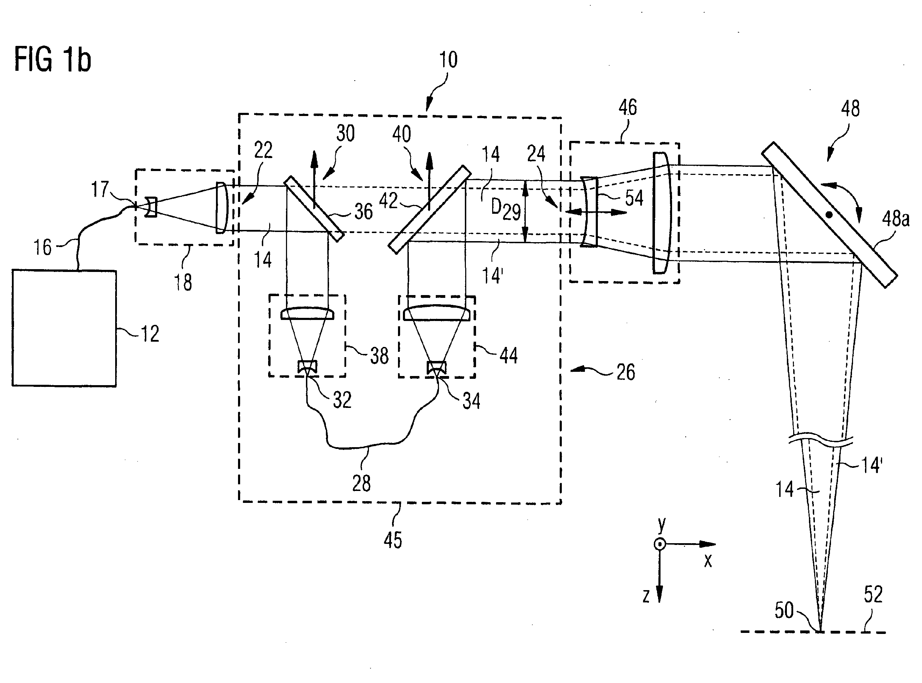

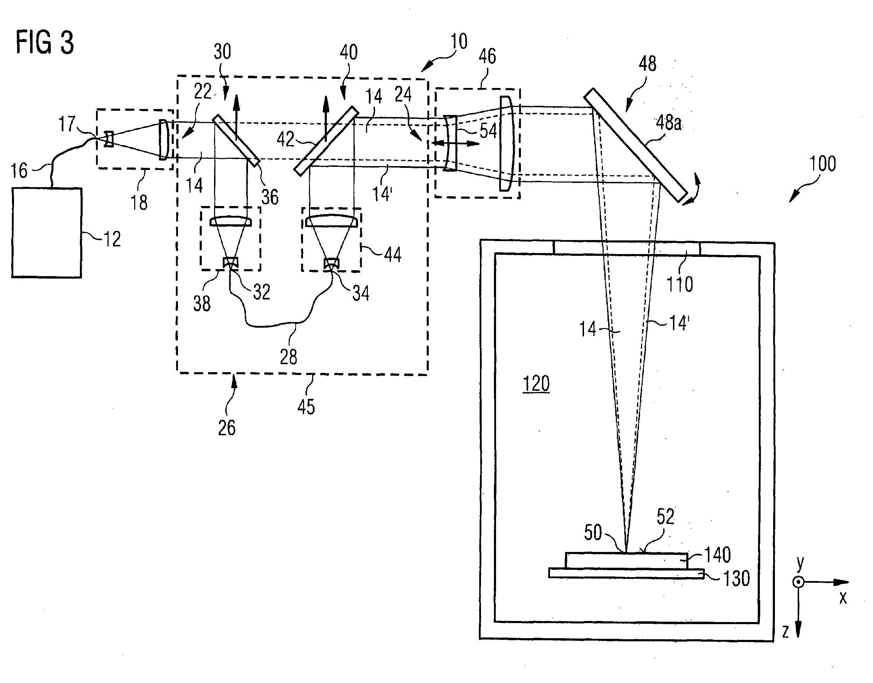

In Fig. 1a, 1b und 3 ist eine optische Bestrahlungsvorrichtung allgemein mit 10 bezeichnet. Die optische Bestrahlungsvorrichtung 10 kann in einer Anlage 100 zur Herstellung von Werkstücken durch Bestrahlung von Pulverschichten eines Rohstoffpulvers mit Laserstrahlung eingesetzt werden, wie sie beispielsweise in Fig. 3 gezeigt ist.

Die optische Bestrahlungsvorrichtung 10 umfasst einen Laser 12. Der Laser 12 erzeugt einen Lichtstrahl 14, der ein schmalbandiges Spektrum mit einer Zentralwellenlänge $\lambda$ aufweist. Die Zentralwellenlänge $\lambda$ liegt beispielsweise im Bereich von 1 $\mu$m, etwa bei 1064 nm. Die Zentralwellenlänge $\lambda$ erfährt in dem zu verarbeitenden Rohstoffpulver eine hohe Absorption. Die Ausgangsleistung des Lasers 12 beträgt beispielsweise im Dauerstrich (englisch: continuous wave; kurz: CW) Betrieb 1 kW.

Der Lichtstrahl 14 wird innerhalb einer Monomoden-Lichtleitfaser 16 geführt. Beispielweise kann der Laser 12 als Faserlaser ausgebildet sein. In diesem Fall kann die Monomoden-Lichtleitfaser 16 als laseraktives Medium des Lasers 12 dienen. Bei der Monomoden-Lichtleitfaser 16 handelt es sich beispielsweise um eine zylindersymmetrische Lichtleitfaser, die einen Faserkern mit Kerndurchmesser $d_{SM}$ von 20 $\mu$m sowie ein den Faserkern ummantelndes cladding umfasst. Die cut-off-Wellenlänge $\lambda_{CO,SM}$ der Monomoden-Lichtleitfaser 16 und die Zentralwellenlänge $\lambda$ des Lichtstrahls 14 sind derart aneinander angepasst, dass der Lichtstrahl 14 innerhalb der Monomoden-Lichtleitfaser 16 anhand von Monomoden-Führung geleitet wird.

Der Lichtstrahl 14 tritt an einem dem Laser 12 abgewandten Faserende 17 der Monomoden-Lichtleitfaser 16 als ein mono-moden (englisch: single-mode; kurz: SM) Lichtstrahl 14 aus. Mit anderen Worten: Bei Austritt des Lichtstrahls 14 aus der Monomoden-Lichtleitfaser 16 wird der Lichtstrahl 14 allein durch die Grundmode, beispielsweise die $TEM_{00}$-Mode, beschrieben und weist in guter Näherung ein gaußförmiges Strahlprofil 20 auf.

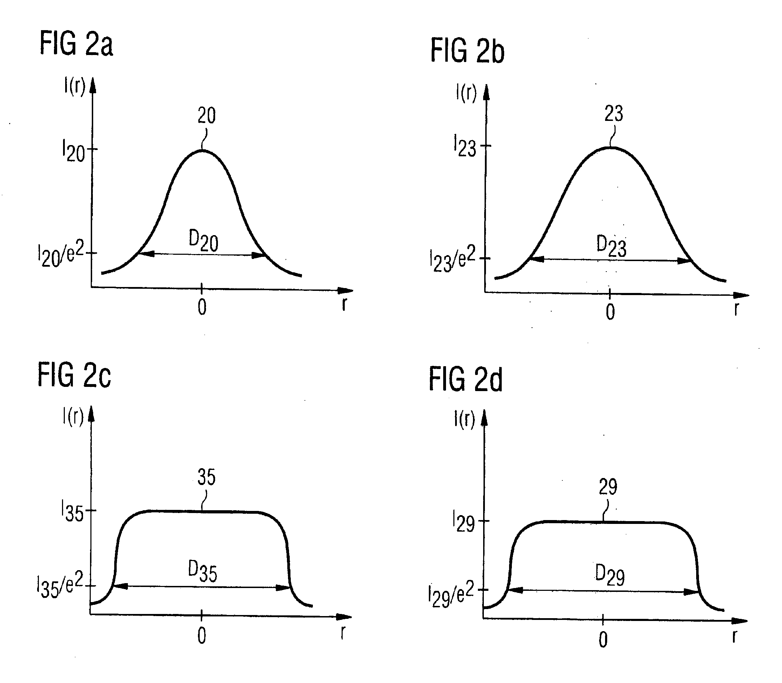

Das gaußförmige Strahlprofil 20 ist in Fig. 2a gezeigt. Dabei stellt der laterale Intensitätsverlauf I(r) des Lichtstrahls 14 eine glockenförmige Verteilung als Funktion des lateralen Abstands r vom Strahlenzentrum r = 0 dar. Die Breite $D_{20}$ der Verteilung I(r), innerhalb derer die Intensität I(r) des Strahlprofils 20 größer gleich $1/e^2 = 13,5\%$ der Maximalintensität $I_{20}$ ist, beträgt in Abhängigkeit des Kerndurchmessers $d_{SM}$ von 20 µm beispielsweise 16 µm.

Der optischen Bestrahlungsvorrichtung 10 ist ein Eingangskollimator 18 zugeordnet. Beispielsweise weist der Eingangskollimator 18 eine Brennweite $f_{EK}$ von 50 mm auf. Das Faserende 17 ist im Brennpunkt bzw. in der Brennebene des Eingangskollimators 18 angeordnet. Der Eingangskollimator 18 sammelt den aus der Monomoden-Lichtleitfaser 16 austretenden Lichtstrahl 14 auf, kollimiert den Lichtstrahl 14 zu einem im Wesentlichen kollimierten Lichtstrahl 14 (d.h. die Restdivergenz des Lichtstrahls 14 ist nach Austritt aus dem Eingangskollimator 18 vernachlässigbar) und führt den kollimierten Lichtstrahl 14 durch einen Eingangsanschluss 22. Durch die Kollimation des Lichtstrahls 14 bleibt das Strahlprofil 23 des durch den Eingangsanschluss 22 hindurchtretenden Lichtstrahls 14 gaußförmig, jedoch beträgt der Strahldurchmesser $D_{23}$ des kollimierten Lichtstrahls 14, innerhalb dessen die Intensität I(r) des Strahlprofils 23 des kollimierten Lichtstrahls 14 größer gleich $1/e^2$ der Maximalintensität $I_{23}$ ist, jetzt etwa 6,3 mm, siehe Fig. 1a und 2b.

Im Strahlengang des durch den Eingangsanschluss 22 eintretenden Lichtstrahls 14 ist dem Eingangsanschluss 22 ein Ausgangsanschluss 24 nachgeschaltet. Der Eingangsanschluss 22 ist als zylindersymmetrischer Tubus ausgebildet. An den Eingangsanschluss 22 kann der Eingangskollimator 18 angeflascht werden, wobei die optische Achse des Eingangskollimators 18 koaxial mit der Symmetrieachse des Eingangsanschlusses 22 verläuft.

Die optische Bestrahlungsvorrichtung 10 umfasst ferner eine Umschaltvorrichtung 26, welche wahlweise zwischen einem ersten Lichtleitzustand und einem zweiten Lichtleitzustand umschaltbar ist. Der erste Lichtleitzustand ist in Fig. 1a dargestellt, wobei der zweite Lichtleitzustand in Fig. 1b dargestellt ist.

Die Umschaltvorrichtung 26 ist dazu eingerichtet, in dem ersten Lichtleitzustand den durch den Eingangsanschluss 22 eintretenden Lichtstrahl 14 mit dem gaußförmigen Strahlprofil 23 zu dem Ausgangsanschluss 24 derart zu leiten, dass der Lichtstrahl 14 bei Austritt aus dem Ausgangsanschluss 24 das zumindest nahezu gleiche gaußförmige Strahlprofil 23 aufweist wie bei Eintritt des Lichtstrahls 14 durch den Eingangsanschluss 22, siehe Fig. 2b. Mit anderen Worten: Im ersten Lichtleitzustand wird der kollimierte Lichtstrahl 14 vom Eingangsanschluss 22 zum Ausgangsanschluss 24 unverändert und ohne Umlenkung durch- bzw. weitergeschleust. Hierzu sind der Eingangskollimator 18, der Eingangsanschluss 22 und der Ausgangsanschluss 24 derart zueinander angeordnet, dass im ersten Lichtleitzustand der durch den Eingangsanschluss 22 eintretende Lichtstrahl 14 aus dem Ausgangsanschluss 24 kollimiert mit unverändertem Strahlprofil 23 und Strahldurchmesser $D_{23}$ austritt.

Die Umschaltvorrichtung 26 ist ferner dazu eingerichtet, in dem zweiten Lichtleitzustand den durch den Eingangsanschluss 22 eintretenden Lichtstrahl 14 mit dem gaußförmigen Strahlprofil 23 anhand einer Multimoden-Lichtleitfaser 28 zu dem Ausgangsanschluss 24 derart zu leiten, dass der Lichtstrahl 14' anhand von Multimoden-Führung in der Multimoden-Lichtleitfaser 28 bei Austritt aus dem Ausgangsanschluss 24 ein von dem gaußförmigen Strahlprofil 23 des durch den Eingangsanschluss 22 eintretenden Lichtstrahls 14 verschiedenes Strahlprofil 29 aufweist, siehe Fig. 2d.

Bei der Multimoden-Lichtleitfaser 28 handelt es sich beispielsweise um eine zylindersymmetrische Lichtleitfaser, die einen Faserkern mit Kerndurchmesser $d_{MM}$ von 100 µm sowie ein den Faserkern ummantelndes cladding umfasst. Die cut-off-Wellen-länge $\lambda_{CO,MM}$ der Multimoden-Lichtleitfaser 28 und die Zentralwellenlänge $\lambda$ des Lichtstrahls 14 sind derart aneinander angepasst, dass der Lichtstrahl 14 innerhalb der Multimoden-Lichtleitfaser 28 anhand von Multimoden-Führung geleitet werden kann bzw. geleitet wird.

Zur Erzeugung des sich von dem Strahlprofil 23 unterscheidenden Strahlprofils 29 umfasst die Umschaltvorrichtung 26 eine erste Lichtlenkeinheit 30, die dazu eingerichtet ist, im zweiten Lichtleitzustand den durch den Eingangsanschluss 22 eintretenden Lichtstrahl 14 auf ein erstes Faserende 32 der Multimoden-Lichtleitfaser 28 derart zu lenken, dass der Lichtstrahl 14' bei Austritt aus einem zweiten Faserende 34 der Multimoden-Lichtleitfaser 28 ein gewünschtes, nicht-gaußförmiges Strahlprofil 35 aufweist.

Hierzu umfasst die erste Lichtlenkeinheit 30 einen in den oder aus dem Strahlengang des durch den Eingangsanschluss 22 eintretenden Lichtstrahls 14 bewegbaren ersten Lichtlenkspiegel 36 und einen ersten Lichtlenkkollimator 38, der dazu eingerichtet ist, im zweiten Lichtleitzustand den anhand des ersten Lichtlenkspiegels 36 gelenkten Lichtstrahl 14 auf das erste Faserende 32 der Multimoden-Lichtleitfaser 28 zu fokussieren.

Der erste Lichtlenkspiegel 36 umfasst eine für die Wellenlänge $\lambda$ des Lichtstrahls 14 hoch-reflektierende ebene Spiegelfläche, die im zweiten Lichtleitzustand in den Strahlengang des Lichtstrahls 14 derart eingebracht ist, dass die Flächennormale des ersten Lichtlenkspiegels 36 mit dem Strahlengang des Lichtstrahls 14 einen Winkel von etwa 45° einschließt. Dadurch wird der Lichtstrahl 14 um etwa 90° umgelenkt, jedoch bleibt er dabei kollimiert. Der Lichtstrahl 14 tritt dann in den ersten Lichtlenkkollimator 38 ein und wird von diesem gebündelt. Der erste Lichtlenkkollimator 38 koppelt den Lichtstrahl 14 durch das erste Faserende 32 in die Multimoden-Lichtleitfaser 28 ein. Der erste Lichtlenkkollimator 38 weist eine Brennweite $f_{LK1}$ von 60 mm auf.

Die Monomoden-Lichtleitfaser 16, das Faserende 17 der Monomoden-Lichtleitfaser 16, der Eingangskollimator 18, die erste Lichtlenkeinheit 30, der erste Lichtlenkspiegel 36, der erste Lichtlenkkollimator 38, die Multimoden-Lichtleitfaser 28 und/oder das erste Faserende 32 der Multimoden-Lichtleitfaser 28 sind bzw. werden zueinander derart angeordnet, dass der Lichtstrahl 14' bei Austritt aus der Multimoden-Lichtleitfaser 28 das gewünschte, nicht-gaußförmige Strahlprofil 35 aufweist.

Hierzu bildet das System bestehend aus dem Eingangskollimator 18 und der ersten Lichtlenkeinheit 30 oder dem ersten Lichtlenkspiegel 36 und dem ersten Lichtlenkkollimator 38 das Faserende 17 der Monomoden-Lichtleitfaser 16 auf das erste Faserende 32 der Multimoden-Lichtleitfaser 28 ab. Dabei schneidet die optische Achse des ersten Lichtlenkkollimators 38 das erste Faserende 32 außerzentrisch (also außermittig bzw. außeraxial). Mit anderen Worten: Die optische Achse des ersten Lichtlenkkollimators 38 schneidet das erste Faserende 32 in einem Punkt, der einen von Null verschiedenen Abstand von dem Zentrum des Faserkerns der Multimoden-Lichtleitfaser 28 am ersten Faserende 32 aufweist. Zusätzlich oder alternativ kann die optische Achse des ersten Lichtlenkkollimators 38 schräg (also weder koaxial noch parallel) zur Symmetrieachse des zylindersymmetrischen Faserkerns der Multimoden-Lichtleitfaser 28 auf das erste Faserende 32 auftreffen. Mit anderen Worten: Vorzugsweise schließt die optische Achse des ersten Lichtlenkkollimators 38 bei Eintritt in das erste Faserende 32 mit der Symmetrieachse des zylindersymmetrischen Faserkerns der Multimoden-Lichtleitfaser 28 einen Winkel $\theta_1$ ein, wobei modulo$[\theta_1, 180°] \neq 0°$.

Dieser Sachverhalt kann auch anhand des Strahlengangs bzw. Strahlenverlaufs des Lichtstrahls 14 formuliert werden: Der Lichtstrahl 14 trifft im zweiten Lichtlenkzustand das erste Faserende 32 außerzentrisch (also außermittig bzw. außeraxial). Der Lichtstrahl 14 schneidet demnach das erste Faserende 32 in einem Schnittpunkt derart, dass das Zentrum des Schnittpunkts einen von Null verschiedenen Abstand vom Zentrum des Faserkerns der Multimoden-Lichtleitfaser 28 am ersten Faserende 32 aufweist. Zusätzlich oder alternativ kann der Hauptstrahl des Lichtstrahls 14 schräg (also weder koaxial noch parallel) zur Symmetrieachse des zylindersymmetrischen Faserkerns der Multimoden-Lichtleitfaser 28 auf das erste Faserende 32 auftreffen. Vorzugsweise schließt der Hauptstrahl des Lichtstrahls 14 also unmittelbar nach Eintritt in das erste Faserende 32 mit der Symmetrieachse des zylindersymmetrischen Faserkerns der Multimoden-Lichtleitfaser 28 einen Winkel $\theta_2$ ein, wobei modulo$[\theta_2, 180°] \neq 0°$.

Zusätzlich ist festzustellen, dass der Faserkern mit Kerndurchmesser $d_{SM} = 20\ \mu m$ der Monomoden-Lichtleitfaser 16 anhand des Eingangskollimators 18 mit der Brennweite $f_{EK} = 50\ mm$ und des ersten Lichtlenkkollimators 38 mit der Brennweite $f_{LK1} = 60\ mm$ auf ein Bild mit Durchmesser $d'_{SM} = d_{SM}\ f_{LK1}/f_{EK} = 24\ \mu m$ auf den Faserkern mit Kerndurchmesser $d_{MM} = 100\ \mu m$ der Multimoden-Lichtleitfaser 28 abgebildet wird. Der Unterschied zwischen $d'_{SM}$ und $d_{MM}$ führt zu einer Moden-Diskrepanz (englisch: mode mismatch) zwischen dem einzukoppelnden Modenfeld des Lichtstrahls 14 und der Grundmode der Multimoden-Lichtleitfaser 28.

Durch die oben beschriebene Art der Justage bzw. durch die oben beschriebene Art der Einkopplung wird der Lichtstrahl 14 innerhalb der Multimoden-Lichtleitfaser 28 anhand von Multimoden-Führung geleitet. Dies bedeutet, dass während der Propagation des Lichtstrahls 14 durch die Multimoden-Lichtleitfaser 28 nicht nur eine, sondern mehrere für die Wellenlänge $\lambda$ des Lichtstrahls 14 innerhalb der Multimoden-Lichtleitfaser 28 mögliche Moden zur Propagation genutzt bzw. besetzt werden. Anhand der Multimoden-Führung unterscheidet sich das Strahlprofil 35 des Lichtstrahls 14' bei Austritt des Lichtstrahls 14' am zweiten Faserende 34 der Multimoden-Lichtleitfaser 28 signifikant von einer gaußförmigen Verteilung wie beispielsweise der des Strahlprofils 20.

Man kann also sagen: Die erste Lichtlenkeinheit 30 ist dazu eingerichtet bzw. die Monomoden-Lichtleitfaser 16, das Faserende 17 der Monomoden-Lichtleitfaser 16, der Eingangskollimator 18, die erste Lichtlenkeinheit 30, der erste Lichtlenkspiegel 36, der erste Lichtlenkkollimator 38, die Multimoden-Lichtleitfaser 28 und/oder das erste Faserende 32 der Multimoden-Lichtleitfaser 28 sind oder werden zueinander derart angeordnet, dass im zweiten Lichtleitzustand der durch den Eingangsanschluss 22 eintretende Lichtstrahl 14 auf das erste Faserende 32 der Multimoden-Lichtleitfaser 28 derart gelenkt wird, dass der Lichtstrahl 14' bei Austritt aus dem zweiten Faserende 34 der Multimoden-Lichtleitfaser 28 den Faserkern Multimoden-Lichtleitfaser 28 vergleichmäßigt, homogenisiert, nahezu gleichmäßig und/oder nahezu homogen ausleuchtet. Mit anderen Worten: Das Modenfeld, welches den Lichtstrahl 14' bei Austritt aus dem zweiten Faserende 34 der Multimoden-Lichtleitfaser 28 repräsentiert, weist eine zumindest über einen Teilabschnitt der Austrittsfläche des Faserkerns der Multimoden-Lichtleitfaser 28 vergleichmäßigte, homogenisierte, nahezu homogene und/oder nahezu Top-Hat-förmige laterale Intensitätsverteilung auf. Demnach weist auch der Lichtstrahl 14' selbst bei Austritt aus dem zweiten Faserende 34 der Multimoden-Lichtleitfaser 28 ein vergleichmäßigtes, homogenisiertes, nahezu homogenes und/oder nahezu Top-Hat-förmiges Strahlprofil 35 auf.

Das Strahlprofil 35 ist in Fig. 2c gezeigt. Dabei stellt der laterale Intensitätsverlauf I(r) des Lichtstrahls 14' eine Verteilung als Funktion des lateralen Abstands r vom Strahlenzentrum r = 0 dar. Die Breite $D_{35}$ der Verteilung I(r), innerhalb derer die Intensität I(r) des Strahlprofils 35 größer gleich $1/e^2$ der Maximalintensität $I_{35}$ ist, beträgt beispielsweise 80 $\mu m$.

Die Umschaltvorrichtung 10 umfasst ferner eine zweite Lichtlenkeinheit 40, die dazu eingerichtet ist, im zweiten Lichtleitzustand der Umschaltvorrichtung 10 den aus dem zweiten Faserende 34 der Multimoden-Lichtleitfaser 28 austretenden, das Strahlprofil 35 aufweisenden Lichtstrahl 14' zum Ausgangsanschluss 24 zu lenken.

Hierzu umfasst die zweite Lichtlenkeinheit 40 einen in den oder aus dem Strahlengang des durch den Eingangsanschluss 22 eintretenden Lichtstrahls 14 bewegbaren zweiten Lichtlenkspiegel 42 und einen zweiten Lichtlenkkollimator 44, der dazu eingerichtet ist, im zweiten Lichtleitzustand den aus dem zweiten Faserende 34 der Multimoden-Lichtleitfaser 28 austretenden Lichtstrahl 14' zu kollimieren und auf den zweiten Lichtlenkspiegel 42 zu lenken, der im zweiten Lichtleitzustand den Lichtstrahl 14' zum Ausgangsanschluss 22 lenkt.

Der aus der Multimoden-Lichtleitfaser 28 austretende Lichtstrahl 14' wird demnach von dem zweiten Lichtlenkkollimator 44 aufgesammelt und kollimiert. Hierzu befindet sich das zweite Faserende 34 im Brennpunkt bzw. in der Brennebene des zweiten Lichtlenkkollimators 44. Der zweite Lichtlenkkollimator 44 weist eine Brennweite $f_{Lk2}$ von 60 mm auf. Der kollimierte Lichtstrahl 14' trifft anschließend auf den zweiten Lichtlenkspiegel 42. Der zweite Lichtlenkspiegel 42 umfasst eine für die Wellenlänge $\lambda$ des Lichtstrahls hoch-reflektierende, ebene Spiegelfläche, die im zweiten Lichtleitzustand in den Strahlengang des Lichtstrahls 14' derart eingebracht ist, dass die Flächennormale der Spiegelfläche des zweiten Lichtlenkspiegels 42 mit dem Strahlengang des Lichtstrahls 14' einen Winkel von etwa 45° einschließt und der Lichtstrahl 14' um etwa 90° derart umgelenkt, dass er dabei kollimiert bleibt und koaxial mit dem durch den Eingangsanschluss 22 eintretenden Lichtstrahl 14 verläuft.

Durch die Kollimation des Lichtstrahls 14' behält das Strahlprofil 29 des durch den Ausgangsanschluss 24 austretenden Lichtstrahls 14' die vergleichmäßigte, homogenisierte, nahezu homogene und/oder nahezu Top-Hat-förmige From des Strahlprofils 35 bei (siehe Fig. 2d), jedoch beträgt der Strahldurchmesser $D_{29}$ des kollimierten Lichtstrahls 14', innerhalb dessen die Intensität I(r) des Strahlprofils 29 des kollimierten Lichtstrahls 14' größer gleich $1/e^2$ der Maximalintensität $I_{29}$ ist, jetzt etwa 9,6 mm, siehe Fig. 1b und 2b.

Der erste und zweite Lichtlenkspiegel 36, 42 sind auf (nicht näher dargestellte) Translationsschlitten (englisch: translation stages) montiert, welche eine präzise lineare Translationsbewegung des ersten und zweiten Lichtlenkspiegels 36, 42 senkrecht zum Strahlengang des durch den Eingangsanschluss 22 eintretenden Lichtstrahls 14 erlauben. Die Translationsschlitten erfüllen die für den zweiten Lichtleitzustand erforderlichen Präzisionsvorgaben bezüglich Stabilität und Reproduzierbarkeit. Der erste und zweite Lichtlenkspiegel 36, 42 befinden sich im ersten Lichtleitzustand außerhalb des Strahlengangs des durch den Eingangsanschluss 22 eintretenden Lichtstrahls 14.

Die optische Bestrahlungsvorrichtung 10 umfasst außerdem eine im Strahlengang des Lichtstrahls 14 bzw. 14' (je nach Lichtleitzustand) der Umschaltvorrichtung 26 nachgeschaltete erste optische Komponente 46 sowie eine im Strahlengang des Lichtstrahls 14 bzw. 14' der ersten optischen Komponente 46 nachgeschaltete zweite optische Komponente 48.

Der Ausgangsanschluss 24 ist als zylindersymmetrischer Tubus ausgebildet, an den die erste optische Komponente 46 derart angeflanscht ist, dass die optische Achse der ersten optischen Komponente 46 koaxial mit der Symmetrieachse des Ausgangsanschlusses 24 verläuft.

Die erste und zweite optische Komponente 46, 48 dienen dem Fokussieren des aus dem Ausgangsanschluss 24 austretenden Lichtstrahls 14 bzw. 14' auf einen Fokus 50 und zum dreidimensionalen Führen des Fokus im Raum. Insbesondere sind die erste und zweite optische Komponente 46, 48 dazu eingerichtet, den Lichtstrahl 14, 14' auf einen beliebigen Punkt innerhalb eines Scanfelds 52 zu fokussieren. Damit der Lichtstrahl 14, 14' auf jeden beliebigen Punkt innerhalb des Scanfelds 52 fokussiert werden kann, ist die räumliche Position des Fokus 50 in drei Raumdimensionen anhand der ersten und zweiten optischen Komponente 46, 48 einstellbar.

Hierzu stellt die erste optische Komponente 46 die Position z des Fokus 50 axial zu der Flächennormalen des Scanfelds 52 ein. Hierzu umfasst die erste optische Komponente 46 eine entlang der optischen Achse der ersten optischen Komponente 46 verschiebbare Linse 54. Die zweite optische Komponente 48 stellt die Positionen x und y des Fokus 50 lateral zu der Flächennormalen des Scanfelds 52 ein. Hierzu umfasst die zweite optische Komponente 48 zwei jeweils um eine Drehachse drehbare Spiegel 48a, wobei die Drehachsen aufeinander senkrecht stehen. In Fig. 1a, 1b und 3 ist zur besseren Übersicht nur einer der beiden Spiegel 48a dargestellt. Beispielsweise ist die zweite optische Komponente 48a als Galvanometer-Scanner ausgebildet. Die Positionen x, y und z sind in Fig. 1a, 1b und 3 anhand eines Koordinatensystems veranschaulicht.

Vorzugsweise sind die erste und zweite optische Komponente 46, 48 dazu eingerichtet, den Lichtstrahl 14, 14' auf einen beliebigen Punkt innerhalb eines ebenen, also ungekrümmten Scanfelds 52 zu fokussieren. Hierfür erlaubt es die Ausgestaltung der ersten optischen Komponente 46, auf ein f-Theta-Objektiv zur Fokussierung des Lichtstrahls 14, 14' zu verzichten. Das Scanfeld 52 misst beispielsweise eine quadratische Fläche von etwa 300 mm x 300 mm.

Die erste optische Komponente 46 ist ferner dazu eingerichtet, den Lichtstrahl 14, 14' aufzuweiten. Der Aufweitungsfaktor beträgt beispielsweise 1,68. Die Schnittweite der ersten optischen Komponente 46, also der Abstand des Scanfelds 52 von der optischen Fläche der ersten optischen Komponente 46, die dem Scanfeld 52 entlang des Strahlengangs des Lichtstrahls 14, 14' am nächsten liegt, beträgt beispielsweise 636 mm.

Im ersten Lichtleitzustand bildet das System bestehend aus dem Eingangskollimator 18, der ersten und der zweiten optischen Komponente 46, 48 das Faserende 17 der Monomoden-Lichtleitfaser 16 auf das Scanfeld 52 scharf ab. Somit wird auch das Strahlprofil 20 des aus der Monomoden-Lichtleitfaser 16 austretenden Lichtstrahls 14 durch das System 18, 46, 48 auf das Scanfeld 52 scharf abgebildet.

Im zweiten Lichtleitzustand hingegen bildet das System bestehend aus dem zweiten Lichtlenkkollimator 44, dem zweiten Lichtlenkspiegel 42, der ersten und der zweiten optischen Komponente 46, 48 das Faserende 34 der Multimoden-Lichtleitfaser 28 auf das Scanfeld 52 scharf ab. Somit wird auch das Strahlprofil 35 des aus der Multimoden-Lichtleitfaser 28 austretenden Lichtstrahls 14' durch das System 42, 44, 46, 48 auf das Scanfeld 52 scharf abgebildet.

In Fig. 3 ist eine Anlage 100 zur Herstellung von Werkstücken durch Bestrahlung von Pulverschichten eines Rohstoffpulvers mit Laserstrahlung dargestellt. Die optische Bestrahlungsvorrichtung 10 ist mit der Anlage 100 derart verbunden, dass der durch die optische Bestrahlungsvorrichtung 10 bereitgestellte Lichtstrahl 14 bzw. 14' (je nach Lichtleitzustand) durch ein Fenster 110 einer Pulverkammer 120 zugeführt wird. Die Anlage 100 umfasst innerhalb der Pulverkammer 120 einen Träger 130, auf welchen Pulverschichten 140 des Rohstoffpulvers aufbringbar sind. Die optische Bestrahlungsvorrichtung 10 ist dazu ausgebildet und angeordnet, eine auf dem Träger 130 aufgebrachte Pulverschicht 140 mit dem Fokus 50 des Lichtstrahls 14 oder 14' zu bestrahlen, um aus dem Rohstoffpulver durch ein generatives Schichtbauverfahren ein dreidimensionales Werkstück herzustellen.

Die optische Bestrahlungsvorrichtung 10 kann eine (nicht näher dargestellte) Eingabeeinheit umfassen, die dazu eingerichtet ist, für das herzustellende Werkstück repräsentative Daten (z.B. CAD-Daten) zu erfassen. Ferner kann die optische Bestrahlungsvorrichtung 10 eine (ebenfalls nicht näher dargestellte) Steuereinheit umfassen, die mit der Eingabeeinheit verbunden und dazu eingerichtet ist, die Umschaltvorrichtung 26 zwischen dem ersten Lichtleitzustand und dem zweiten Lichtleitzustand in Abhängigkeit der von der Eingabeeinheit erfassten, für das herzustellende Werkstück repräsentativen Daten umzuschalten.

Das in Fig. 2a gezeigte Strahlprofil 20 eignet sich für eine detailreiche und genaue Bearbeitung (Belichtung oder Bestrahlung) in den äußeren Konturen, d. h. in dem Hüllenbereich der Pulverschicht. Das in Fig. 2c gezeigte Strahlprofil 35 eignet sich dagegen für eine flächige Bearbeitung (Belichtung oder Bestrahlung) in dem Kernbereich der Pulverschicht.

Demnach befindet sich die Umschaltvorrichtung 26 im ersten Lichtleitzustand (siehe Fig. 1a), wenn die äußeren Konturen, d.h. der Hüllenbereich des zu fertigenden Werkstücks erzeugt wird/werden. Hingegen befindet sich die Umschaltvorrichtung 26 sich im zweiten Lichtleitzustand (siehe Fig. 1b), wenn eine flächige Belichtung im Kernbereich der Pulverschicht erfolgt.

Zur Vermeidung thermischer, mechanischer und/oder akustischer Einflüsse auf die Funktionsweise der Umschaltvorrichtung 26 kann die Umschaltvorrichtung 26 mit Hilfe eines in Fig. 1a, 1b und 3 gestrichelt dargestellten Gehäuses 45 eingehaust sein. Das Gehäuse 45 ist gegenüber der Umgebung thermisch, mechanisch und/oder akustisch isoliert. Ferner kann die Temperatur innerhalb des Gehäuses 45 anhand dafür geeigneter Mittel stabil gehalten werden.

Der Eingangsanschluss 22 und der Ausgangsanschluss 24 sind mit dem Gehäuse 45 der Umschaltvorrichtung 26 beispielsweise durch Verschrauben fest miteinander verbunden.

Sofern nicht ausdrücklich unterschiedlich benannt, stehen in den Figuren gleiche Bezugszeichen für gleiche oder gleichwirkende Elemente. Im Übrigen ist eine beliebige Kombination der in den Figuren erläuterten Merkmale denkbar.

**Patentansprüche**

1. Optische Bestrahlungsvorrichtung (10) für eine Anlage zur Herstellung von dreidimensionalen Werkstücken durch Bestrahlung von Pulverschichten eines Rohstoffpulvers mit Laserstrahlung, umfassend:

   - einen Laser (12) zur Erzeugung eines Lichtstrahls (14), dessen Spektrum als Zentralwellenlänge ($\lambda$) einen Median aufweist, **gekennzeichnet durch**:
   - eine für die Zentralwellenlänge ($\lambda$) des **durch** einen Eingangsanschluss (22) eintretenden, ein erstes Strahlprofil (20, 23) aufweisenden Lichtstrahls (14) zur Multimoden-Führung in der Grundmode und zusätzlich in einer oder mehreren höheren Moden geeignete Multimoden-Lichtleitfaser (28) mit einer cut-off-Wellenlänge ($\lambda_{CO,MM}$), wobei die Zentralwellenlänge ($\lambda$) des Lichtstrahls (14) kürzer als die cut-off-Wellenlänge ($\lambda_{CO,MM}$) der Lichtleitfaser (28) ist, und
   - eine Umschaltvorrichtung (26), die für eine Hülle-Kern-Strategie wahlweise zwischen einem ersten Lichtleitzustand und einem zweiten Lichtleitzustand umschaltbar ist,

   wobei die Umschaltvorrichtung (26) dazu eingerichtet ist, in dem ersten Lichtleitzustand den **durch** den Eingangsanschluss (22) eintretenden Lichtstrahl (14) zu einem Ausgangsanschluss (24) derart zu leiten, dass der Lichtstrahl (14) bei Austritt aus dem Ausgangsanschluss (24) das erste Strahlprofil (23) aufweist, und in dem zweiten Lichtleitzustand den **durch** den Eingangsanschluss (22) eintretenden Lichtstrahl (14) anhand der Multimoden-Lichtleitfaser (28) zu dem Ausgangsanschluss (24) derart zu leiten, dass der Lichtstrahl (14') anhand von Multimoden-Führung in der Multimoden-Lichtleitfaser bei Austritt aus dem Ausgangsanschluss (24) ein von dem ersten Strahlprofil (23) verschiedenes zweites Strahlprofil (29) aufweist und eine das erste Strahlprofil (23) charakterisierende Breite ($D_{23}$) in der lateralen Intensitätsverteilung des ersten Strahlprofils (23) schmaler ist als eine das zweite Strahlprofil (29) charakterisierende Breite ($D_{29}$) in der lateralen Intensitätsverteilung des zweiten Strahlprofils (29).

2. Optische Bestrahlungsvorrichtung nach Anspruch 1, wobei die Umschaltvorrichtung (26) eine erste Lichtlenkeinheit (30) umfasst, die dazu eingerichtet ist, im zweiten Lichtleitzustand der Umschaltvorrichtung (26) den durch den Eingangsanschluss (22) eintretenden, das erste Strahlprofil (23) aufweisenden Lichtstrahl (14) auf ein erstes Faserende (32) der Multimoden-Lichtleitfaser (28) derart zu lenken, dass der Lichtstrahl (14') bei Austritt aus einem zweiten Faserende (34) der Multimoden-Lichtleitfaser (28) das zweite Strahlprofil (29) aufweist, und die Umschaltvorrichtung (26) ferner eine zweite Lichtlenkeinheit (40) umfasst, die dazu eingerichtet ist, im zweiten Lichtleitzustand der Umschaltvorrichtung (26) den aus dem zweiten Faserende (34) der Multimoden-Lichtleitfaser (28) austretenden, das zweite Strahlprofil (29, 35) aufweisenden Lichtstrahl (14') zum Ausgangsanschluss (24) zu lenken.

3. Optische Bestrahlungsvorrichtung nach Anspruch 2, wobei die erste Lichtlenkeinheit (30) der Umschaltvorrichtung (26) einen in den oder aus dem Strahlengang des durch den Eingangsanschluss (22) eintretenden Lichtstrahls (14) bewegbaren ersten Lichtlenkspiegel (36) und einen ersten Lichtlenkkollimator (38) umfasst, der dazu eingerichtet ist, im zweiten Lichtleitzustand den anhand des ersten Lichtlenkspiegels (36) gelenkten Lichtstrahl (14) auf das erste Faserende (32) der Multimoden-Lichtleitfaser (28) zu fokussieren, und die zweite Lichtlenkeinheit (40) der Umschaltvorrichtung (26) einen in den oder aus dem Strahlengang des durch den Eingangsanschluss (22) eintretenden Lichtstrahls (14) bewegbaren zweiten Lichtlenkspiegel (42) und einen zweiten Lichtlenkkollimator (44) umfasst, der dazu eingerichtet ist, im zweiten Lichtleitzustand den aus dem zweiten Faserende (34) der Multimoden-Lichtleitfaser (28) austretenden Lichtstrahl (14') zu kollimieren und auf den zweiten Lichtlenkspiegel (42) zu lenken, der im zweiten Lichtleitzustand den Lichtstrahl (14') zum Ausgangsanschluss (24) lenkt.

4. Optische Bestrahlungsvorrichtung nach einem der Ansprüche 1 bis 3, ferner umfassend:

 - eine für die Zentralwellenlänge ($\lambda$) des erzeugten Lichtstrahls (14) zur Monomoden-Führung geeignete Monomoden-Lichtleitfaser (16), und

 - einen Eingangskollimator (18), der dazu eingerichtet ist, den aus der Monomoden-Lichtleitfaser (16) austretenden Lichtstrahl (14) zu kollimieren und durch den Eingangsanschluss (22) zu führen.

5. Optische Bestrahlungsvorrichtung nach Anspruch 4, wobei der Laser (12) dazu eingerichtet ist, den Lichtstrahl (14) mit einer Zentralwellenlänge ($\lambda$) zu erzeugen, die länger ist als eine für die Monomoden-Führung erforderliche cut-off-Wellenlänge ($\lambda_{CO,SM}$) der Monomoden-Lichtleitfaser (16).

6. Optische Bestrahlungsvorrichtung nach Anspruch 4 oder 5,
wobei ein Faserende (17) der Monomoden-Lichtleitfaser (16), der Eingangskollimator (18), die erste Lichtlenkeinheit (30) und das erste Faserende (32) der Multimoden-Lichtleitfaser (28) zueinander derart angeordnet sind, dass der Lichtstrahl (14') bei Austritt aus dem zweiten Faserende (34) der Multimoden-Lichtleitfaser (28) ein vergleichmäßigtes, homogenisiertes, nahezu homogenes und/oder nahezu Top-Hat-förmiges zweites Strahlprofil (29, 35) aufweist.

7. Optische Bestrahlungsvorrichtung nach einem der Ansprüche 4 bis 6, ferner umfassend:

 - optische Komponenten (46, 48, 48a, 54) zum Fokussieren des aus dem Ausgangsanschluss austretenden Lichtstrahls (14, 14') auf einen Fokus (50) und zum dreidimensionalen Führen des Fokus (50) im Raum.

8. Verfahren zum Betreiben einer optischen Bestrahlungsvorrichtung für eine Anlage zur Herstellung von dreidimensionalen Werkstücken durch Bestrahlung von Pulverschichten eines Rohstoffpulvers mit Laserstrahlung, mit den Schritten:

 - Erzeugen eines Lichtstrahls (14), dessen Spektrum als Zentralwellenlänge ($\lambda$) einen Median aufweist, und
 - Führen des die Zentralwellenlänge ($\lambda$) und ein erstes Strahlprofil (20, 23) aufweisenden Lichtstrahls (14) durch einen Eingangsanschluss (22),

**gekennzeichnet durch**:

 - Bereitstellen einer für die Zentralwellenlänge ($\lambda$) des **durch** den Eingangsanschluss (22) eintretenden Lichtstrahls (14) zur Multimoden-Führung in der Grundmode und zusätzlich in einer oder mehreren höheren Moden geeigneten Multimoden-Lichtleitfaser (28) mit einer cut-off-Wellenlänge ($\lambda_{CO,MM}$), wobei die Zentralwellenlän-

ge ($\lambda$) des Lichtstrahls (14) kürzer als die cut-off-Wellenlänge ($\lambda_{COM,MM}$) der Lichtleitfaser (28), und

- wahlweises Umschalten für eine Hülle-Kern-Strategie zwischen einem ersten Lichtleitzustand und einem zweiten Lichtleitzustand anhand einer Umschaltvorrichtung (26),

wobei in dem ersten Lichtleitzustand der **durch** den Eingangsanschluss (22) eintretende Lichtstrahl (14) zu einem Ausgangsanschluss (24) derart geleitet wird, dass der Lichtstrahl (14) bei Austritt aus dem Ausgangsanschluss (24) das erste Strahlprofil (23) aufweist, und in dem zweiten Lichtleitzustand der **durch** den Eingangsanschluss (22) eintretende Lichtstrahl (14) anhand der Multimoden-Lichtleitfaser (28) zu dem Ausgangsanschluss (24) derart geleitet wird, dass der Lichtstrahl (14') anhand von Multimoden-Führung in der Multimoden-Lichtleitfaser (28) bei Austritt aus dem Ausgangsanschluss (24) ein von dem ersten Strahlprofil (23) verschiedenes zweites Strahlprofil (29) aufweist und eine das erste Strahlprofil (23) charakterisierende Breite ($D_{23}$) in der lateralen Intensitätsverteilung des ersten Strahlprofils (23) schmaler ist als eine das zweite Strahlprofil (29) charakterisierende Breite ($D_{29}$) in der lateralen Intensitätsverteilung des zweiten Strahlprofils (29).

9. Verfahren nach Anspruch 8,
wobei im zweiten Lichtleitzustand der Umschaltvorrichtung (26) der durch den Eingangsanschluss (22) eintretende, das erste Strahlprofil (20, 23) aufweisende Lichtstrahl (14) anhand einer ersten Lichtlenkeinheit (30) der Umschaltvorrichtung (26) auf ein erstes Faserende (32) der Multimoden-Lichtleitfaser (28) derart gelenkt wird, dass der Lichtstrahl (14') bei Austritt aus einem zweiten Faserende (34) der Multimoden-Lichtleitfaser (28) das zweite Strahlprofil (29, 35) aufweist, und im zweiten Lichtleitzustand der Umschaltvorrichtung (26) der aus dem zweiten Faserende (34) der Multimoden-Lichtleitfaser (28) austretende, das zweite Strahlprofil (29, 35) aufweisende Lichtstrahl (14') anhand einer zweiten Lichtlenkeinheit (40) der Umschaltvorrichtung (26) zum Ausgangsanschluss (24) gelenkt wird.

10. Verfahren nach Anspruch 9,
wobei zwischen dem ersten und zweiten Lichtleitzustand ein erster Lichtlenkspiegel (36) der ersten Lichtlenkeinheit (30) in den oder aus dem Strahlengang des durch den Eingangsanschluss (22) eintretenden Lichtstrahls (14) bewegt wird und im zweiten Lichtleitzustand der anhand des ersten Lichtlenkspiegels (36) gelenkte Lichtstrahl (14) anhand eines ersten Lichtlenkkollimators (38) der ersten Lichtlenkeinheit (30) auf das erste Faserende (32) der Multimoden-Lichtleitfaser (28) fokussiert wird, und zwischen dem ersten und dem zweiten Lichtleitzustand ein zweiter Lichtlenkspiegel (42) der zweiten Lichtlenkeinheit (40) in den oder aus dem Strahlengang des durch den Eingangsanschluss (22) eintretenden Lichtstrahls (14) bewegt wird und im zweiten Lichtleitzustand der aus dem zweiten Faserende (34) der Multimoden-Lichtleitfaser (28) austretende Lichtstrahl (14') anhand eines zweiten Lichtlenkkollimators (44) der zweiten Lichtlenkeinheit (40) kollimiert und auf den zweiten Lichtlenkspiegel (42) gelenkt wird und anhand des zweiten Lichtlenkspiegels (42) zum Ausgangsanschluss (24) gelenkt wird.

11. Verfahren nach einem der Ansprüche 8 bis 10, ferner die Schritte umfassend:

     - Führen des erzeugten Lichtstrahls (14) anhand einer für die Zentralwellenlänge ($\lambda$) des erzeugten Lichtstrahls (14) zur Monomoden-Führung geeigneten Monomoden-Lichtleitfaser (16) derart, dass der Lichtstrahl (14) anhand von Monomoden-Führung in der Monomoden-Lichtleitfaser (16) bei Austritt aus der Monomoden-Lichtleitfaser (16) ein erstes Strahlprofil (20, 23) aufweist, und
     - Kollimieren des aus der Monomoden-Lichtleitfaser (16) austretenden Lichtstrahls (14) und Führen des kollimierten Lichtstrahls (14) durch den Eingangsanschluss (22) anhand eines Eingangskollimators (18).

12. Verfahren nach Anspruch 11,
wobei der Lichtstrahl (14) anhand des Lasers (12) mit einer Zentralwellenlänge ($\lambda$) erzeugt wird, die länger ist als eine für die Monomoden-Führung erforderliche cut-off-Wellenlänge ($\lambda_{CO,SM}$) der Monomoden-Lichtleitfaser (16).

13. Verfahren nach Anspruch 11 oder 12,
wobei ein Faserende (17) der Monomoden-Lichtleitfaser (16), der Eingangskollimator (18), die erste Lichtlenkeinheit (30) und das erste Faserende (32) der Multimoden-Lichtleitfaser (28) im zweiten Lichtleitzustand derart angeordnet werden, dass der Lichtstrahl (14') bei Austritt aus dem zweiten Faserende (34) der Multimoden-Lichtleitfaser (28) ein vergleichmäßigtes, homogenisiertes, nahezu homogenes und/oder nahezu Top-Hat-förmiges zweites Strahlprofil (29, 35) aufweist.

14. Verfahren nach einem der Ansprüche 11 bis 13, ferner die Schritte umfassend:

     - Fokussieren des aus dem Ausgangsanschluss (24) austretenden Lichtstrahls (14, 14') auf einen Fokus (50) und dreidimensionales Führen des Fokus (50) im Raum anhand von optischen Komponenten (46, 38, 48a, 54).

**15.** Anlage (100) zur Herstellung von dreidimensionalen Werkstücken durch Bestrahlung von Pulverschichten eines Rohstoffpulvers mit Laserstrahlung, umfassend:

- einen Träger (130), auf welchen Pulverschichten (140) des Rohstoffpulvers aufbringbar sind, und
- eine optische Bestrahlungsvorrichtung (10) nach einem der Ansprüche 1 bis 7, wobei die optische Bestrahlungsvorrichtung (10) dazu ausgebildet und angeordnet ist, eine auf dem Träger (130) aufgebrachte Pulverschicht (140) mit dem Lichtstrahl (14, 14') zu bestrahlen, um aus dem Rohstoffpulver durch ein generatives Schichtbauverfahren ein dreidimensionales Werkstück herzustellen.

**Claims**

**1.** An optical radiation device (10) for a system for producing three-dimensional workpieces by irradiation of powder layers of a powered raw material using laser radiation, comprising:

- a laser (12) for creating a beam of light (14) the spectrum of which has a median as a central wavelength ($\lambda$),

**characterized by**:

- a multimode optical fiber (28) suitable for the central wavelength ($\lambda$) of the beam of light (14) for multimode guidance in the basic mode and additionally in one or more higher modes, the beam of light having a first beam profile (20, 23) and entering through an input connection (22), the multimode optical fiber (28) having a cut-off wavelength ($\lambda_{CO}$, MM), wherein the central wavelength ($\lambda$) of the beam of light (14) is shorter than the cut-off wavelength ($\lambda_{CO,MM}$) of the optical fiber (28), and
- a switching device (26) which is, for a core-shell strategy, selectively switchable between a first light conducting state and a second light conducting state, wherein the switching device (26) is configured to conduct the beam of light (14) entering through the input connection (22) in the first light conducting state to an output connection (24), such that the beam of light (14) has a first beam profile (23) on emerging from the output connection (24) and to conduct the beam of light (14) entering through the input connection (22) in the second light conducting state to the output connection (24) by means of the multimode optical fiber (28) such that the beam of light (14') has a second beam profile (29) which is different from the first beam profile (23) on emerging from the output connection (24) by means of the multimode guidance in the multimode optical fiber and a characteristic width ($D_{23}$) of the first beam profile in the lateral intensity distribution of the first beam profile (23) is narrower than the characteristic width ($D_{29}$) of the second beam profile in the lateral intensity distribution of the second beam profile (29).

**2.** The optical irradiation device according to claim 1, wherein the switching device (26) comprises a first light deflecting unit (30) which is configured to deflect the beam of light (14) having a first beam profile (23) entering through the input connection (22) in the second light conducting state of the switching device (26) onto a first fiber end (32) of the multimode optical fiber (28) such that the beam of light (14') has the second beam profile (29) on emerging from a second fiber end (34) of the multimode optical fiber (28), and the switching device (26) further comprises a second light deflecting unit (40) which is configured to deflect the beam of light (14') having the second beam profile (29, 35) emerging from the second fiber end (34) of the multimode optical fiber in the second light conducting state of the switching device (26) to the output connection (24).

**3.** The optical irradiation device according to claim 2, wherein the first light deflecting unit (30) of the switching device (26) comprises a first light deflecting mirror (36) which is movable into or out of the beam path of the beam of light (14) entering through the input connection (22) and comprises a first light deflecting collimator (38) which is configured to focus the beam of light (14) deflected by means of the first light deflecting mirror (36) in the second light conducting state onto the first fiber end (32) of the multimode optical fiber (28), and the second light deflecting unit (40) of the switching device (26) comprises a second light deflecting mirror (42) that is movable into or out of the beam path of the beam of light (14) entering through the input connection (22), and comprises a second light deflecting collimator (44) which is configured to collimate the beam of light (14') emerging from the second fiber end (34) of the multimode optical fiber (28) in the second light conducting state and to deflect it onto the second light deflecting mirror (42) which deflects the beam of light (14') to the output connection (24) in the second light conducting state.

**4.** The optical irradiation device according to any one of claims 1 to 3, further comprising:

- a monomode optical fiber (16) suitable for monomode guidance for the central wavelength ($\lambda$)

of the beam of light (14), and
- an input collimator (18) which is configured to collimate the beam of light (14) emerging from the monomode optical fiber (16) and to guide it through the input connection (22).

5. The optical irradiation device according to claim 4, wherein the laser (12) is configured to generate the beam of light (14) with a central wavelength ($\lambda$) which is longer than the cutoff wavelength ($\lambda_{COS,SM}$) of the monomode optical fiber (16) required for the monomode guidance.

6. The optical irradiation device according to claim 4 or 5, wherein a fiber end (17) of the monomode optical fiber (16), the input collimator (18), the first light deflecting unit (30) and the first fiber end (32) of the multimode optical fiber (28) are arranged in relation to one another so that the beam of light (14') has a leveled, homogenized, almost homogeneous and/or almost top-hat-shaped second beam profile (29, 35) on emerging from the second fiber end (34) of the multimode optical fiber (28).

7. The optical irradiation device according to any one of claims 4 to 6, further comprising:

   - optical components (46, 48, 48a, 54) for focusing the beam of light (14, 14') emerging from the output connection onto a focus (50) and for three-dimensional guidance of the focus (50) in space.

8. A method for operating an optical irradiation device for a system for producing three-dimensional workpieces by irradiation of powder layers of a powdered raw material using laser radiation, comprising the steps:

   - creating a beam of light (14), the spectrum of which has a median as a central wavelength ($\lambda$), and
   - guiding the beam of light (14) having the central wavelength ($\lambda$) and a first beam profile (20, 23) through an input connection (22),

   **characterized by**:

   - providing a multimode optical fiber (28) which is suitable for the central wavelength ($\lambda$) of the beam of light (14) entering through the input connection (22) for multimode guidance in the basic mode and additionally in one or more higher modes, the multimode optical fiber (28) having a cut-off wavelength ($\lambda_{CO, MM}$), wherein the central wavelength ($\lambda$) of the beam of light (14) is shorter than the cut-off wavelength ($X_{CO, MM}$) of the optical fiber (28), and
   - selectively switching, for a core-shell strategy, between a first light conducting state and a second light conducting state by means of a switching device (26), wherein the beam of light (14) entering through the input connection (22) in the first light conducting state is guided to an output connection (24) such that the beam of light (14) has the first beam profile (23) on emerging from the output connection (24), and in the second light conducting state the beam of light (14) entering through the input connection (22) is guided to the output connection (24) by means of the multimode optical fiber (28) such that the beam of light (14') has a second beam profile (29) which is different from the first beam profile (23) by means of the multimode guidance in the multimode optical fiber (28) on emerging from the output connection (24) and a characteristic width ($D_{23}$) of the first beam profile (23) in the lateral intensity distribution of the first beam profile (23) is narrower than the characteristic width ($D_{29}$) of the second beam profile (29) in the lateral intensity distribution of the second beam profile (29).

9. The method according to claim 8, wherein the beam of light (14) having the first beam profile (20, 23) and entering through the input connection (22) in the second light conducting state of the switching device (26) is deflected by means of a first light deflecting unit (30) of the switching device (26) onto a first fiber end (32) of the multimode optical fiber (28) such that the beam of light (14') has the second beam profile (29, 35) on emerging from a second fiber end (34) of the multimode optical fiber (28), and in the second light conducting state of the switching device (26) the beam of light (14') having the second beam profile (29, 35) and emerging from the second fiber end (34) of the multimode optical fiber (28) in the second light conducting state of the switching device (26) is deflected to the output connection (24) by means of a second light deflecting unit (40) of the switching device (26).

10. The method according to claim 9, wherein, between the first and the second light conducting states, a first light deflecting mirror (36) of the first light deflecting unit (30) is moved into or out of the beam path of the beam of light (14) entering through the input connection (22), and in the second light conducting state, the beam of light (14), which is deflected by means of the first light deflecting mirror (36) is focused on the first fiber end (32) of the multimode optical fiber (28) by means of a first light deflecting collimator (38) of the first light deflecting unit (30), and a second light deflecting mirror (42) of the second light deflecting unit (40) is moved into or out of the beam path of the beam of light (14) entering through the input connection (22) between the first and second light conducting states, and in the second light conducting state, the beam of light (14') emerging from the second fiber end (34) of the multimode optical fiber (28) is collimated by means of a second light deflecting collimator (44) of the second light deflecting unit (40) and is deflected onto the second light deflecting mirror (42) and is also deflected to the output connection (24) by means of the second light deflecting mirror (42).

11. The method according to any one of claims 8 to 10, further comprising the steps:

- guiding the beam of light (14) thereby generated by means of a monomode optical fiber (16) which is suitable for the central wavelength ($\lambda$) of the beam of light (14) thereby generated for the monomode guidance, such that the beam of light (14) has a first beam profile (20, 23) on emerging from the monomode optical fiber (16) by means of the monomode guidance in the monomode optical fiber (16), and
- collimating the beam of light (14) emerging from the monomode optical fiber (16) and guiding the collimated beam of light (14) through the input connection (22) by means of an input collimator (18).

12. The method according to claim 11, wherein the beam of light (14) is generated by means of the laser (12) with a central wavelength ($\lambda$) which is longer than the cutoff wavelength ($\lambda_{CO,SM}$) of the monomode optical fiber (16) which is necessary for the monomode guidance.

13. The method according to claim 11 or 12, wherein a fiber end (17) of the monomode optical fiber (16), the input collimator (18), the first light deflecting unit (30) and the first fiber end (32) of the multimode optical fiber (28) is/are arranged in the second light conducting state, so that the beam of light (14') has a leveled, homogenized, almost homogeneous and/or almost top-hat-shaped second beam profile (29, 35) on emerging from the second fiber end (34) of the multimode optical fiber (28).

14. The method according to any one of claims 11 to 13, further comprising the steps:

- focusing the beam of light (14, 14') emerging from the output connection (24) onto a focus (50) and guiding the focus (50) in three dimensions in space by means of optical components (46, 38, 48a, 54).

15. A system (100) for producing three-dimensional workpieces by irradiating powder layers of a powdered raw material with laser radiation, comprising:

- a carrier (130) onto which powder layers (140) of the powdered raw material can be applied and
- an optical irradiation device (10) according to any one of claims 1 to 7, wherein the optical irradiation device (10) is configured and arranged to irradiate a powder layer (140) applied to the carrier (130) using the beam of light (14, 14') to produce a three-dimensional workpiece from the powdered raw material by using a generative layer buildup method.

**Revendications**

1. Dispositif de rayonnement optique (10) pour une installation destinée à la fabrication de pièces à usiner tridimensionnelles par irradiation de couches de matière première en poudre à l'aide d'un rayonnement laser, comportant

- un laser (12) pour produire un faisceau lumineux (14) dont le spectre présente une médiane en tant que longueur d'onde centrale ($\lambda$),

**caractérisé par**

- une fibre optique multimode (28) adaptée pour le guidage multimode dans un mode de base ainsi que dans un ou plusieurs modes supérieurs et pour la longueur d'onde centrale ($\lambda$) du faisceau lumineux (14) présentant un premier profil de faisceau (20, 30) et entrant par une borne d'entrée (22), et comprenant une longueur d'onde de coupure ($\lambda_{CO,MM}$), la longueur d'onde centrale ($\lambda$) du faisceau lumineux (14) étant plus courte que la longueur d'onde de coupure ($\lambda_{CO,MM}$) de la fibre optique (28), et
- un dispositif de commutation (26) sélectivement commutable entre un premier et un deuxième état de conduction de lumière pour une stratégie noyau-coque,
ce dispositif de commutation (26) étant conçu, dans le premier état de conduction de lumière, pour diriger le faisceau lumineux (14) entrant par la borne d'entrée (22) vers une borne de sortie (24) de telle manière que le faisceau lumineux (14) présente le premier profil de faisceau (23) à sa sortie par la borne de sortie (24), et dans le deuxième état de conduction de lumière, pour diriger à l'aide de la fibre optique multimode (28) le faisceau lumineux (14) entrant par la borne d'entrée (22) vers la borne de sortie (24) de telle manière que le faisceau lumineux (14') présente, sur la base du guidage multimode dans la fibre optique multimode, un deuxième profil de faisceau (29) différent du premier profil de faisceau (23) à sa sortie de la borne de sortie (24) et qu'une largeur ($D_{23}$) caractérisant le premier profil de faisceau (23) est, dans la répartition de l'intensité latérale du premier profil de faisceau (23), plus petite que la largeur ($D_{29}$) caractérisant le deuxième profil de faisceau (29) dans la répartition d'intensité latérale du deuxième profil de faisceau (29).

2. Dispositif de rayonnement optique (10) selon la revendication 1,
le dispositif de commutation (26) comportant un premier module déflecteur de lumière (30) qui est conçu, dans le deuxième état de conduction de lumière du dispositif de commutation (26), pour diriger le faisceau lumineux (14) présentant le premier profil de faisceau (23) et entrant par la borne d'entrée (22) sur une première extrémité (32) de la fibre optique multimode (28) de telle manière que le faisceau lumineux (14') présente le deuxième profil de faisceau (29) à sa sortie d'une deuxième extrémité (34) de la fibre optique multimode (28) et que le dispositif de commutation (26) comporte en outre un deuxième module déflecteur de lumière (40) qui est conçu, dans le deuxième état de conduction de la lumière du dispositif de commutation (26), pour diriger vers la borne de sortie (24) le faisceau lumineux (14') présentant le deuxième profil de faisceau (29, 35) et sortant de la deuxième extrémité (34) de la fibre optique multimode (28)

3. Dispositif de rayonnement optique (10) selon la revendication 2,
le module déflecteur de lumière (30) du dispositif de commutation (26) comportant un premier miroir déflecteur de lumière (36) pouvant être déplacé dans ou en dehors de de la trajectoire du faisceau lumineux (14) entrant par la borne d'entrée (22) et un premier collimateur déflecteur de lumière (38) qui est conçu, dans le deuxième état de conduction de lumière, pour focaliser le faisceau lumineux (14) dirigé sur la première extrémité (32) de la fibre optique multimode (28) à l'aide du premier miroir déflecteur de lumière (36), et le deuxième module déflecteur de lumière (40) du dispositif de commutation (26) comportant un deuxième miroir déflecteur de lumière (42) pouvant être déplacé dans ou en dehors de la trajectoire du faisceau lumineux (14) entrant par la borne d'entrée (22) et un deuxième collimateur déflecteur de lumière (44) qui est conçu pour collimater le faisceau lumineux (14') sortant de la deuxième extrémité (34) de la fibre optique multimode (28) dans le deuxième état de conduction de lumière et le diriger sur le deuxième miroir déflecteur de lumière (42) qui dirige le faisceau lumineux (14') vers la borne de sortie (24) dans le deuxième état de conduction de lumière.

4. Dispositif de rayonnement optique (10) selon l'une des revendications 1 à 3, comportant en outre:

   - une fibre optique monomode (14) adaptée pour le guidage monomode et pour la longueur d'onde centrale (λ) du faisceau lumineux (14) produit, et
   - un collimateur d'entrée (18) qui est conçu pour collimater le faisceau lumineux (14) sortant de la fibre optique monomode (16) et pour diriger celui-ci à travers la borne d'entrée (22).

5. Dispositif de rayonnement optique (10) selon la revendication 4,
le laser (12) étant conçu pour produire le faisceau lumineux (14) comprenant une longueur d'onde centrale (λ) qui est plus grande qu'une longueur de coupure ($λ_{CO,SM}$) de la fibre optique monomode (16), requise pour le guidage monomode.

6. Dispositif de rayonnement optique (10) selon la revendication 4 ou 5,
une extrémité (17) de la fibre optique monomode (16), le collimateur d'entrée (18), le premier module déflecteur de lumière (30) et la première extrémité (32) de la fibre optique multimode (28) sont disposés les uns par rapport aux autres de telle sorte que le faisceau lumineux (14') présente à sa sortie de la deuxième extrémité (34) de la fibre optique multimode (28) un deuxième profil de faisceau (29, 35) uniformisé, homogénéisé, sensiblement homogène et/ou sensiblement en forme de crête.

7. Dispositif de rayonnement optique (10) selon l'une des revendications 4 à 6, comportant en outre :

   - des composants optiques (46, 48, 48a, 54) pour focaliser le faisceau lumineux (14, 14') sortant de la borne de sortie sur un point focal (50) et pour guider ledit point focal (50) dans un espace tridimensionnel.

8. Procédé pour faire fonctionner un dispositif de rayonnement optique (10) pour une installation destinée à la fabrication de pièces à usiner tridimensionnelles par irradiation de couches de matière première en poudre à l'aide d'un rayonnement laser, comportant les étapes suivantes :

   - la production d'un faisceau lumineux (14) dont le spectre présente une médiane en tant que longueur d'onde centrale (λ), et
   - le guidage du faisceau lumineux (14) présentant la longueur d'onde centrale (λ) et un premier profil de faisceau (20, 23) à travers la borne d'entrée (22),

   **caractérisé par**

- la fourniture d'une fibre optique multimode (28) adaptée pour le guidage multimode dans un mode de base ainsi que dans un ou plusieurs modes supérieurs et pour la longueur d'onde centrale ($\lambda$) du faisceau lumineux (14) entrant par une borne d'entrée (22), et comprenant une longueur d'onde de coupure ($\lambda_{CO,MM}$), la longueur d'onde centrale ($\lambda$) du faisceau lumineux (14) étant plus courte que la longueur d'onde de coupure ($\lambda_{CO,MM}$) de la fibre optique (28), et

- la commutation (26) sélective entre un premier et un deuxième état de conduction de lumière à l'aide d'un dispositif de commutation (26), pour une stratégie noyau-coque,

le faisceau lumineux (14) entrant par la borne d'entrée (22) étant dirigé, dans le premier état de conduction de lumière, vers une borne de sortie (24) de telle manière que le faisceau lumineux (14) présente le premier profil de faisceau (23) à sa sortie par la borne de sortie (24), et le faisceau lumineux (14) entrant par la borne d'entrée (22) étant dirigé, dans le deuxième état de conduction de lumière, vers la borne de sortie (24) à l'aide de la fibre optique multimode (28) de telle manière que le faisceau lumineux (14') présente, sur la base du guidage multimode dans la fibre optique multimode (28), un deuxième profil de faisceau (29) différent du premier profil de faisceau (23) à sa sortie de la borne de sortie (24) et qu'une largeur ($D_{23}$) caractérisant le premier profil de faisceau (23) est, dans la répartition de l'intensité latérale du premier profil de faisceau (23), plus petite que la largeur ($D_{29}$) caractérisant le deuxième profil de faisceau (29) dans la répartition d'intensité latérale du deuxième profil de faisceau (29).

9. Procédé selon la revendication 8,
le faisceau lumineux (14) présentant le premier profil de faisceau (20, 23) et entrant par la borne d'entrée (22) étant dirigé, dans le deuxième état de conduction de lumière du dispositif de commutation (26), sur une première extrémité (32) de la fibre optique multimode (28) à l'aide d'un premier module déflecteur de lumière (30) du dispositif de commutation (26) de telle manière que le faisceau lumineux (14') présente le deuxième profil de faisceau (29,35) à sa sortie d'une deuxième extrémité (34) de la fibre optique multimode (28), et le faisceau lumineux (14') présentant le deuxième profil de faisceau (29, 35) et sortant de la deuxième extrémité (34) de la fibre optique multimode (28) étant dirigé, dans le deuxième état de conduction de la lumière du dispositif de commutation (26), vers la borne de sortie (24) à l'aide d'un deuxième module déflecteur de lumière (40).

10. Procédé selon la revendication 9,
un premier miroir déflecteur de lumière (36) du premier module déflecteur de lumière (30) étant, entre le premier et le deuxième état de conduction de lumière, déplacé dans ou en dehors de la trajectoire du faisceau lumineux (14) entrant par la borne d'entrée (22), et le faisceau lumineux (14) dirigé à l'aide du premier miroir déflecteur de lumière (36) étant focalisé sur la première extrémité (32) de la fibre optique multimode (28) à l'aide d'un premier collimateur déflecteur de lumière (38) du premier module déflecteur de lumière (30), dans le deuxième état de conduction de lumière, et un deuxième miroir déflecteur de lumière (42) du deuxième module déflecteur de lumière (40) étant, entre le premier et le deuxième état de conduction de lumière, déplacé dans ou en dehors de la trajectoire du faisceau lumineux (14) entrant par la borne d'entrée (22), et le faisceau lumineux (14') sortant de la deuxième extrémité (34) de la fibre optique multimode (28) étant, dans le deuxième état de conduction de lumière, collimaté à l'aide d'un deuxième collimateur déflecteur de lumière (44) du deuxième module déflecteur de lumière (40) et dirigé sur le deuxième miroir déflecteur de lumière (42) et vers la borne de sortie (24) à l'aide du deuxième miroir déflecteur de lumière (42), dans le deuxième état de conduction de lumière.

11. Procédé selon l'une des revendications 8 à 10, comportant en outre les étapes suivantes :

- le guidage du faisceau lumineux (14) produit, à l'aide d'une fibre optique monomode (14) adaptée pour le guidage monomode dans la fibre optique monomode (16) et pour la longueur d'onde centrale ($\lambda$) du faisceau lumineux (14) produit de telle sorte que le faisceau lumineux (14), à l'aide du guidage monomode dans la fibre optique monomode (16), présente un premier profil de faisceau (20, 23) à sa sortie de la fibre optique monomode (16), et

- la collimation du faisceau lumineux (14) sortant de la fibre optique monomode (16) et le guidage du faisceau lumineux (14) collimaté à travers la borne d'entrée (22) à l'aide d'un collimateur d'entrée (18).

12. Procédé selon la revendication 11,
le faisceau lumineux (14) étant produit à l'aide du laser (12) ayant une longueur d'onde centrale ($\lambda$) qui est plus grande qu'une longueur de coupure ($\lambda_{CO,SM}$) de la fibre optique monomode (16), requise pour le guidage monomode.

13. Procédé selon la revendication 11 ou 12,
une extrémité (17) de la fibre optique monomode (16), le collimateur d'entrée (18), le premier module déflecteur de lumière (30) et la première extrémité (32) de la fibre optique multimode (28) étant, dans le deuxième état de conduction de lumière, disposés de telle sorte que le faisceau lumineux (14') présente à sa sortie de la deuxième extrémité (34) de la fibre optique multimode (28) un deuxième profil de faisceau (29, 35) uniformisé, homogénéisé, sensiblement homogène et/ou sensiblement en forme de crête.

14. Procédé selon l'une des revendications 11 à 13, comportant en outre les étapes suivantes :

- la focalisation du faisceau lumineux (14, 14') sortant de la borne de sortie (24) sur un point focal (50) et guidage dans l'espace tridimensionnel du point focal (50) à l'aide de composants optiques (46, 38, 48a, 54).

15. Installation (100) destinée à la fabrication de pièces à usiner tridimensionnelles par irradiation de couches de matière première en poudre à l'aide d'un rayonnement laser, comportant :

- un substrat (130) sur lequel peuvent être appliquées des couches de pulvérisation d'une poudre de matière brute, et
- un dispositif de rayonnement optique (10) selon l'une des revendications 1 à 7, ce dispositif de rayonnement optique (10) étant conçu et disposé pour irradier à l'aide du faisceau lumineux (14,14') une couche de poudre (140) appliquée sur le substrat (130) pour fabriquer, par procédé de construction par couches, une pièce à usiner tridimensionnelle à partir d'une matière première en poudre.

FIG 1a

# FIG 1b

EP 2 596 901 B1

## FIG 2a

## FIG 2b

## FIG 2c

## FIG 2d

FIG 3

EP 2 596 901 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20010023861 A1